# EUROPÄISCHE PATENTSCHRIFT

(11) **EP 2 727 834 B1**
(45) Veröffentlichungstag und Bekanntmachung des Hinweises auf die Patenterteilung: **12.06.2019**
(21) Anmeldenummer: 13184403.7
(22) Anmeldetag: 13.09.2013
(51) Int. Cl.: B64C 31/024, B64F 5/00, B64C 1/26, B64D 27/02

(54) **Bausatz und Herstellverfahren zum Herstellen eines unbemannten Luftfahrzeugs sowie damit hergestelltes unbemanntes Luftfahrzeug**
Kit and production method for producing an unmanned aircraft and unmanned aircraft produced with same
Jeu de construction et procédé de fabrication pour la fabrication d'un aéronef sans pilote et aéronef sans pilote fabriqué de cette manière

(30) Priorität: 31.10.2012 DE 102012021340
(43) Veröffentlichungstag der Anmeldung: 07.05.2014
(73) Patentinhaber: Airbus Defence and Space GmbH, 82024 Taufkirchen (DE)
(72) Erfinder: Steinwandel, Jürgen, 88690 Uhldingen-Mühlhofen (DE); van Toor, Jan, 81739 München (DE); Voit-Nitschmann, Rudolf, 71254 Ditzingen (DE); Scholz, Werner, 73275 Ohmden (DE)
(74) Vertreter: Kastel, Stefan

(56) Entgegenhaltungen:
- DE-A1-102009 038 509
- KR-A- 20110 128 683
- US-A1- 2006 016 930
- US-A1- 2008 149 758
- US-A1- 2009 178 386

## Beschreibung

Die Erfindung betrifft einen Bausatz und ein Herstellverfahren zum Herstellen eines unbemannten Luftfahrzeuges sowie ein damit hergestelltes unbemanntes Luftfahrzeug.

Ein unbemanntes Luftfahrzeug, auch Drohne oder UAV genannt, ist ein Fluggerät der unbemannten Luftfahrt, das z.B. zur Überwachung, Erkundung, Aufklärung, als Zieldarstellungsdrohne, zu Messzwecken oder auch mit Waffen bestückt insbesondere in Kampfgebieten verwendbar ist. Drohnen können z.B. militärisch, geheimdienstlich oder zivil eingesetzt werden. Eine Drohne fliegt unbemannt entweder automatisiert über ein Computerprogramm oder vom Boden über Funksignale bzw. über Satellitenfunk gesteuert. Je nach Einsatz und Ausstattung können Drohnen Nutzlasten tragen, wie z.B. Raketen für einen militärischen Angriff.

Im üblichen Sprachgebrauch ist für derartige Luftfahrzeuge die Abkürzung UAV für "Unmanned Aerial Vehicle" gebräuchlich. Zusätzlich hat sich die Abkürzung UAS für "Unmanned Aircraft System" eingebürgert. Die Bezeichnung umfasst das Gesamtsystem aus der fliegenden Drohne, der Bodenstation zum Start und gegebenenfalls Landung sowie der Station zur Führung und Überwachung des Fluges.

Eine umfassende Darstellung von UAS und von unterschiedlichen UAVs findet sich in Reg Austin: "Unmanned Aircraft Systems - UAVS design, development and deployment", Wiley Verlag, 2010. Die hiesige Offenbarung baut auf den Kenntnissen in dieser Druckschrift auf; diese Druckschrift wird hiermit durch Bezugnahme inkorporiert.

Aus der DE 10 2009 038 509 A1 ist ein Grundkörper für Luftfahrzeuge bekannt, an den unterschiedliche Auftriebsstrukturen wie eine Tragflügelstruktur, ein Gyrokopterrotor oder Drachenflügel eines Trikes, an unterschiedlichen Befestigungsschnittstellen befestigbar sind, um mit einem Grundkörper unterschiedliche Typen von Ultraleichtflugzeugen aufzubauen. Dabei ist erwähnt, dass das Luftfahrzeug auch als Modellflugzeug gestaltet sein kann.

Aus der DE 10 2010 021 022 A1 ist ein UAV in Form eines Kippflügel-Flugzeugs bekannt.

UAVs mit Hybridsystem sind aus der US 8 128 019 B2 sowie der EP 2 196 392 A2 bekannt. Diese beiden Druckschriften betreffen Mini-UAVs, die von Fußtruppen im Feld mitgeführt werden können und mit sehr kleinen Leistungen in geringer Höhe fliegen können. Hierbei wird ein Verbrennungsmotor mit konstanter Drehzahl betrieben; ein zusätzlicher Elektromotor wird variabel betrieben, um bei einfachem und leichtgewichtigem Aufbau eine Leistungsregelung durchzuführen.

Allgemein werden UAVs in unterschiedliche Klassen eingeteilt. Diese Klassen umfassen die Mikro-UAV und Mini-UAV, taktische UAVs mittlerer Größe und hoch und ausdauernd fliegende UAVs vom Typ MALE und HALE. Die Mikro-UAV mit Einsatzgewichten kleiner als etwa 1 kg und die Mini-UAV sind dazu konzipiert, durch Truppen im Feld transportiert und eingesetzt zu werden, um Nahfeldaufklärungen durchzuführen. Sie sind für einen Transport durch Fußsoldaten oder kleinere Transportgeräte optimiert. Es ist für solche Mini- und Mikro-Systeme ein modularer Aufbau bekannt, siehe hierzu z.B. die US 6 056 237, die US 7 699 261 B1, die US 7 922 115 B2 oder die US 7 237 750 B2. Bei solch kleinen Mikro- oder Mini-UAVs dient die Modularität in erster Linie dazu, die UAVs schnell transportfähig zu machen. Es handelt sich ausschließlich um sehr kleine Flugkörper, die z.B. von Soldaten und Fußtruppen zu Einsatzgebieten getragen werden und dort zur Aufklärung oder dergleichen benutzt werden. Für solche Zwecke macht eine Modularität auch Sinn, um die Geräte gut in einem Rucksack transportieren zu können und schnell einsatzbereit machen zu können. Bei solch kleinen Geräten ist außerdem eine Modularität auch wegen der geringen Nutzlasten von Vorteil. Soll z.B. mit dem Mini- oder Mikro-UAV eine Aufklärungsmission durchgeführt werden, kann ein Aufklärungslastmodul eingesetzt werden. Soll ein Waffeneinsatz durchgeführt werden, wird ein Waffenmodul eingesetzt. Beide Module können solch kleine Geräte nicht tragen.

Bei der hier vorliegenden Erfindung geht es jedoch um weitaus größere UAVs mit maximalen Startgewichten von mindestens 250 kg. Zielrichtung für die hiesige Erfindung sind UAVs wenigstens der MALE-Klasse. Die Abkürzung MALE steht für "Medium Altitude Long Endurance" und ist eine Klasse in der möglichen Klassifizierung von unbemannten Luftfahrzeugen (Unmanned Aerial Vehicle - UAV, unbemanntes Luftfahrzeug). "Medium Altitude" (Deutsch: mittlere Höhe) bezieht sich dabei auf die Einsatzhöhe, die bei MALE-UAVs zwischen etwa 5000 m und 15000 m (15000 ft bis 45000 ft) liegt. "Long Endurance" (Deutsch: lange Ausdauer) beschreibt Missionszeiten von mehr als 12 Stunden, insbesondere Missionszeiten über 24 Stunden. Ein typischer Vertreter dieser Klasse sind die Drohnen, welche unter dem Handelsnamen "Predator" auf dem Markt erhältlich sind.

Als weitere Klasse gibt es die sogenannten HALE-UAVs. Die Abkürzung HALE steht für "High Altitude Long Endurance" und ist eine weitere Klasse in der Klassifizierung von unbemannten Luftfahrzeugen (Unmanned Aerial Vehicle - UAV). "High Altitude" (Deutsch: große Höhe) bezieht sich dabei auf die Einsatzhöhe, die bei HALE-UAVs über 15000 m (etwa 45000 ft) liegt. "Long Endurance" beschreibt wie oben die lange Missionszeit von mehr als 12 Stunden und insbesondere mehr als 24 Stunden. Ein typischer Vertreter dieser Klasse der HALE-UAVs sind die Drohnen, die auf dem Markt unter der Bezeichnung "Global Hawk" oder "Euro Hawk" vertrieben werden.

Derzeitige Vertreter der MALE- und HALE-Klassen sind aufwändig für Spezialaufgaben konstruiert und aufwändig in der Herstellung und Konstruktion. Als Motoren besitzen Vertreter der MALE-Klasse Kolbenmotoren oder Turboprop-Triebwerke, wobei für Vertreter der HALE-Klasse Turbofan-Triebwerke eingesetzt werden. Die Erfindung hat sich zum Ziel gesetzt, unbemannte Luftfahrzeuge zumindest der MALE-Klasse, vorzugsweise auch der HALE-Klasse, kostengünstig und universeller einsetzbar herstellen zu können.

Die Erfindung schlägt hierzu einen Bausatz gemäß Anspruch 1 sowie ein Herstellverfahren gemäß dem Nebenanspruch vor.

Vorteilhafte Ausgestaltungen der Erfindung sind Gegenstand der Unteransprüche. Außerdem betrifft die Erfindung ein mit einem solchen Bausatz oder mit einem solchen Herstellverfahren herstellbares unbemanntes Luftfahrzeug.

Die Erfindung schafft, gemäß eines ersten Aspekts davon, einen Bausatz zum Herstellen eines unbemannten Luftfahrzeugs mit einem maximalen Startgewicht von wenigstens 250kg, wobei der Bausatz eine Rumpfstruktur mit einer Auftriebserzeugungsstrukturbefestigungsschnittstelle zur Befestigung einer Auftriebserzeugungsstruktur und weiter eine erste Auftriebserzeugungsstrukur und eine unterschiedliche zweite Auftriebserzeugungsstruktur aufweist, wobei die erste und die zweite Auftriebsstrukturerzeugungsstruktur jeweils eine gleich ausgebildete Rumpfstrukturbefestigungsschnittstelle zur Befestigung an der Auftriebsstrukturerzeugungsschnittstelle der Rumpfstruktur aufweist.

Dabei sind die unterschiedlichen Auftriebsstrukturen unterschiedliche Tragflügelstrukturen zum Aufbau eines unbemannten Luftfahrzeugs der HALE-Klasse oder zum Aufbau eines unbemannten Luftfahrzeugs der MALE-Klasse.

Es ist bevorzugt, dass der Bausatz zur Herstellung eines unbemannten Motorsegelflugzeugs ausgebildet ist.

Es ist bevorzugt, dass der Bausatz einen modular aufgebauten Antrieb umfasst.

Es ist bevorzugt, dass der Bausatz einen Antrieb umfasst, wobei der Antrieb einen als Diesel- und/oder Kerosinmotor ausgebildeten Verbrennungsmotor mit Ladereinrichtung zur Motoraufladung aufweist.

Es ist bevorzugt, dass der Antrieb ein Hybridantrieb ist, wobei der Bausatz zusätzlich zu dem Verbrennungsmotor einen Elektromotor und eine Energiespeichereineinrichtung zum Speichern elektrischer Energie zum Antreiben des Elektromotors umfasst.

Es ist bevorzugt, dass der Hybridantrieb eine schaltbare Kupplungseinrichtung aufweist, mit der der Verbrennungsmotor und/oder der Elektromotor wahlweise mit einem Schuberzeuger verbunden werden können.

Es ist bevorzugt, dass der Hybridantrieb ein Parallel-Hybrid, bei dem wahlweise der Verbrennungsmotor oder der Elektromotor oder sowohl der Verbrennungsmotor als auch der Elektromotor mit einem Schuberzeuger verbindbar sind, oder ein serieller Hybrid ist, bei dem der Verbrennungsmotor als Range-Extender für den Elektromotorantrieb ausgebildet ist.

Es ist bevorzugt, dass die Ladereinrichtung modular ausgebildet ist, um wahlweise unterschiedliche Aufladungsstufen für den Verbrennungsmotor vorzusehen.

Es ist bevorzugt, dass der Verbrennungsmotor modular aufgebaut ist, um wahlweise unterschiedliche Leistungsstufen des Verbrennungsmotors vorzusehen.

Es ist bevorzugt, dass der Verbrennungsmotor ein Kreiskolbenmotor ist.

Gemäß einem weiteren Aspekt schafft die Erfindung ein Verfahren zum Herstellen eines unbemannten Luftfahrzeuges mit den Schritten
Auswählen einer ersten Tragflächenstruktur oder einer zweiten Tragflächenstruktur abhängig von einer gewünschten maximalen Reiseflughöhe für das Luftfahrzeug und
Befestigen einer ausgewählten Tragflächenstruktur an einer vorgegebenen Rumpfstruktur.

Erfindungsgemäß ist dabei weiter vorgesehen, dass die erste Auftriebserzeugungsstruktur ausgewählt wird, um ein unbemanntes Luftfahrzeug der HALE-Klasse zu erhalten, und die zweite Auftriebsstruktur ausgewählt wird, um ein unbemanntes Luftfahrzeug der MALE-Klasse zu erhalten.

Gemäß noch einem weiteren Aspekt schafft die Erfindung ein unbemanntes Luftfahrzeug, welches durch Herstellung unter Verwendung eines Bausatzes der zuvor genannten Art oder eines Herstellverfahrens der zuvor genannten Art erhältlich ist.

Eine bevorzugte Ausgestaltung der Erfindung betrifft einen Bausatz für ein unbemanntes Luftfahrzeug, dessen Antrieb einen - vorzugsweise als Diesel- und/oder Kerosinmotor ausgebildeten - Verbrennungsmotor mit Ladereinrichtung zur Motoraufladung umfasst, sowie ein entsprechend mit einem solchen Antrieb versehenes UAV.

Es ist bevorzugt, dass der Antrieb ein Hybridantrieb ist, der zusätzlich zu dem Verbrennungsmotor einen Elektromotor und eine Energiespeichereineinrichtung zum Speichern elektrischer Energie zum Antreiben des Elektromotors umfasst. Es ist bevorzugt, dass der Verbrennungsmotor und der Elektromotor wahlweise parallel oder in Serie betreibbar sind.

Es ist bevorzugt, dass die Ladereinrichtung zur mehrstufigen Aufladung ausgebildet ist und/oder wenigstens einen ersten Lader und einen zweiten Lader, insbesondere für eine mehrstufige Aufladung, umfasst.

Es ist bevorzugt, dass die Ladereinrichtung wenigstens einen durch Abgasenergie antreibbaren Lader umfasst.

Es ist bevorzugt, dass die Ladereinrichtung wenigstens einen mechanischen Lader umfasst.

Es ist bevorzugt, dass der wenigstens eine mechanische Lader durch eine Abtriebswelle des Verbrennungsmotors und/oder durch einen Elektromotor antreibbar ist.

Es ist bevorzugt, dass der mechanische Lader durch den Elektromotor des Hybridantriebs antreibbar ist.

Es ist bevorzugt, dass eine Steuerung vorgesehen ist, mit der die Ladereinrichtung und/oder der Hybridantrieb abhängig von unterschiedlichen Parametern im Flugbetrieb steuerbar ist.

Es ist bevorzugt, dass die Steuerung dazu ausgebildet ist, die Ladereinrichtung und/oder den Hybridantrieb, insbesondere die Zu- und Abschaltung einer ersten und/oder einer zweiten Stufe der Motoraufladung oder die Zu- und Abschaltung des Elektromotors, abhängig von wenigstens einem der Parameter Höhe, Winkel eines Start- oder Landeflugs zur Vertikalen, gewünschte Geschwindigkeit, zulässige Wärmeabgabe, zulässiger Betriebsgeräuschpegel und/oder Temperatur zu steuern.

Gemäß einem weiteren bevorzugten Aspekt der Erfindung ist ein Verfahren zum Betrieb eines der voranstehend beschriebenen oder mit einem der voranstehend beschriebenen Bausätze herstellbaren unbemannten Luftfahrzeugs vorgesehen, das gekennzeichnet ist durch:
Steuern einer Aufladung eines Verbrennungsmotors eines Antriebs des und/oder eines Zusammenwirkens von Verbrennungsmotor und Elektromotor eines Hybridantriebs abhängig von wenigstens einem der Parameter Höhe, Winkel eines Start- oder Landeflugs zur Vertikalen, gewünschte Geschwindigkeit, zulässige Wärmeabgabe, zulässiger Betriebsgeräuschpegel und/oder Temperatur.

Es ist bevorzugt, dass bei Über- oder Unterschreiten vorbestimmter Grenzwerte für den wenigstens einen Parameter:
- eine erste Aufladungsstufe;
- eine zweite Aufladungsstufe,
- ein mechanischer Lader,
- ein elektrischer Lader,
- ein erster Abgaslader,
- ein zweiter Abgaslader oder
- ein Elektromotor zusätzlich zum laufenden Verbrennungsmotor und/oder
- der Verbrennungsmotor zusätzlich zum laufenden Elektromotor zugeschaltet oder abgeschaltet wird.

Bei einer besonders bevorzugten Ausgestaltung wird ein bisher als Elektroflugzeug konzipiertes Flugzeug - z.B. das Flugzeug e-Genius - als Grundkonstruktionsprinzip verwendet, um daraus ein hochleistungsfähiges UAV zu machen. Es ist zumindest der MALE-Betrieb vorgesehen. Durch eine Umrüstung soll auch der HALE-Betrieb durchführbar sein.

Bevorzugt wird ein Konzept verfahren, das ein als Ein-Mann- oder Zwei-Mann-Motorsegelflugzeug konzipiertes Grundkonzept vorgesehen wird. Es werden vorzugsweise eine oder zwei oder mehrere vorgegebene Rumpfstrukturen unter Verwendung dieses Konzepts vorgesehen. Passend hierzu gibt es unterschiedliche Auftriebserzeugungsstrukturen wie insbesondere unterschiedliche Tragflächenkonstruktionen, die die unterschiedlichen Bereiche abdecken.

Die bei der bisherigen Motorsegelkonzeption für den Piloten genutzte Nutzlast kann für unterschiedliche Lasten für das unbemannte Fluggerät benutzt werden. Dementsprechend können auch Lasten von mehr als 100 kg getragen werden.

Bei der Erfindung geht es insbesondere um UAVs mit einem Gesamtgewicht von mehr als 250 kg. Als Grundkonzept ist vorgesehen, mit wenigen gleichen Baumodulen unterschiedliche UAV-Produkte herzustellen. Insbesondere sollen mit wenigen Modulen die beiden Hochleistungsfunktionen MALE und HALE abgebildet werden.

Eine weitere Idee erstreckt sich auf ein modulares Antriebskonzept. Ausgehend von dem bisher bekannten reinen Elektroflugzeug "e-Genius" kann man mit einem als "Range Extender" eingesetzten Verbrennungsmotor mit nur 35 kW Leistung bei einer Höhe von bis zu 10 km eine Reichweite von etwa 6000 km erreichen. Ein mit dem erfindungsgemäßen Konzept hergestelltes UAV könnte z.B. mit Range Extender betrieben in das Einsatzgebiet fliegen und dann rein elektrisch z.B. Aufklärungsflüge durchführen. Durch den reinen Elektrobetrieb gibt es im Einsatzgebiet eine sehr geringe thermische und akustische Signatur. Mit anderen Worten werden nur wenig Wärme und nur wenige Geräusche emittiert. Dadurch ist das unbemannte Luftfahrzeug durch Gegner kaum erfassbar.

Besonders bevorzugt ist ein serieller Hybrid mit einem als Verbrennungsmotor eingesetzten Range Extender oder auch ein paralleler Hybrid vorgesehen, bei dem der Vorschub entweder durch einen Verbrennungsmotor oder einen Elektromotor oder auch sowohl durch den Verbrennungsmotor als auch den Elektromotor angetrieben wird.

Der Verbrennungsmotor kann auch modular ausgebildet sein. Beispielsweise kommt ein Verbrennungsmotor mit einem modularen Aufladungssystem in Betracht. In einer ersten Stufe kann der Verbrennungsmotor ohne Aufladung eingesetzt werden. In einer zweiten Stufe kann der Verbrennungsmotor mit einfacher Aufladung - z.B. Turbolader - eingesetzt werden. In einer zweiten Stufe kann der höher aufgeladener Verbrennungsmotor - beispielsweise versehen mit Turbolader und mechanischem Lader - vorgesehen werden.

Als Verbrennungsmotor wird besonders bevorzugt ein Kreiskolbenmotor oder Wankelmotor vorgesehen. Ein Kreiskolbenmotor kann besonders vorteilhaft modular aufgebaut sein. Für geringere Leistungen kann ein Ein-Scheiben-Kreiskolbenmotor vorgesehen werden. Braucht man eine größere Leistung, setzt man eine Scheibe hinzu. Für noch größere Leistungen setzt man möglicherweise eine dritte Scheibe hinzu.

Wird dann eine größere Leistung benötigt, kann man die nächstgrößere Baureihe nehmen oder einen zweiten Motor hinzusetzen.

Durch diese unterschiedlichen Stufen von Antriebsmodulen kann man einen sehr großen Antriebsleistungsbereich zwischen ca. 35 kW Leistung bis hoch zu den Leistungen, die für besonders große HALE-UAVs benötigt werden und bisher über Turbofan-Triebwerke abgedeckt werden, erreichen. Man kann somit auch Turbinenleistungen abdecken.

Besonders bevorzugt ist mit dem erfindungsgemäßen Bausatz als Ziel ein MALE-UAV auf der Basis eines UAVs mit Elektroantrieb für den Einsatzbereich Aufklärung und gegegebenenfalls Kampfeinsätze mit Einsatzhöhen bis ca. 10 000 m und Reichweiten bis ca. 5000 km vorgesehen. Da mit herkömmlichen Batteriespeichern solche UAVs derzeit von der Leistungsdichte her nicht dargestellt werden, ist in bevorzugter Ausgestaltung eine Kombination eines Elektroantriebes mit verbrennungsmotorischem Antrieb vorgesehen.

Bisherige MALE-UAVs werden ausschließlich mit Verbrennungsmaschinen ohne elektrischen Basisantrieb betrieben; als Beispiele dienen die US-Predator-UAVs mit Antrieben über Kolbenmotoren und Propeller oder über Turboprop-Maschinen. Die UAVs der HALE-Klasse benötigen sogar Turbofan-Triebwerke. Bisher findet man nur bei sehr kleinen UAVs mit geringer Einsatzdauer (sog. taktische UAVs mit Einsatzdauer bis ca. 2 Stunden) reine Elektroantriebe.

Mit einem entsprechenden Antrieb haben die unbemannten Luftfahrzeuge Vorteile, insbesondere im Zielgebiet, aufgrund der geringen IR- und akustischen Signatur. Dazu kommt, dass der rein elektrische Antrieb einen besseren Wirkungsgrad verglichen mit Verbrennungsmaschinen aufweist (Reichweitenerhöhung). Besonders interessant ist die modulare Konzeption einer Familie von MALE-UAVs auf Grundlage eines Basisflugzeugs mit variabler Flügelgeometrie.

Eine bevorzugte Ausgestaltung der Erfindung betrifft die Konzeption einer Familie von MALE-UAVs basierend auf einem Grundflugzeug. Unterschiedliche Einsatzszenarien - insbesondere unterschiedliche Einsatzhöhe, Einsatzgeschwindigkeit, Reichweite - werden dargestellt durch einen Basisrumpf mit einsatzspezifischer Modifikation, z.B. für Nutzlast, sowie durch austauschbare Tragflächen unterschiedlicher Streckung, insbesondere für unterschiedliche Missionshöhen und/oder unterschiedliche Nutzlasten.

Bei einer vorteilhaften Ausgestaltung wird der Antriebsstrang im Wesentlichen elektrisch vorgesehen. Der Antriebsstrang umfasst vorzugsweise wenigstens einen Energiespeicher wie z.B. Batterien hoher Kapazität - z.B. Lithium-Ionen, Lithium-Polymer, Lithium-Schwefel, Lithium-Sauerstoff und/oder Lithium-Fluor -, eine Leistungselektronik und einen oder mehrere Elektromotoren, vorzugsweise zum Antreiben eines Propellers als Schuberzeuger. Zur Reichweiten- bzw. Flugdauererhöhung wird vorzugsweise eine Verbrennungsmaschine mit elektrischem Generator integriert.

Ein grundsätzlicher Vorteil gegenüber bestehenden MALE-Konzepten liegt in der Modularität und somit der vereinfachten Herstellung unterschiedlicher UAVs mit einem Baukasten. Vorzugsweise ist das UAV als elektrische Plattform konzipiert. Vorzugsweise wird in Verbindung mit effizienten Batterien auf Lithium-Basis ein Konzept bereitgestellt, das neue Möglichkeiten der MALE-UAVs erlaubt. Vorzugsweise wird dieses Konzept dahingehend verbessert, dass für eine zusätzliche Verbrennungskraftmaschine ein Ölmotor - Betriebsstoffe Diesel und/oder Kerosin - in Verbindung mit einem elektrischen Generator zur Anwendung kommt. Für Luftfahrtanwendungen besonders vorteilhaft ist z.B. die Verwendung fremd gezündeter Kreiskolbenmotoren mit Hochdruckeinspritzung von Diesel und/oder Kerosin.

Es ist ausreichend, für den Verbrennungsmotor als Spitzenleistung ca. 50% der Maximalleistung des Elektromotors vorzusehen. Ein Betrieb bis 10 000 m und darüber hinaus ist durch Aufladung, wie z.B. Abgasaufladung und/oder mechanische Lader, möglich. Der mechanische Lader kann z.B. durch die Abtriebswelle des Verbrennungsmotors angetrieben werden und/oder elektrisch angetrieben werden.

Um die Vorteile eines elektrischen Antriebes auch für größere UAVs und auch für höhere Flughöhen und weitere Strecken - insbesondere für UAVs der MALE-Klasse (Medium Altitude Long Endurance) oder auch der HALE-Klasse (High Altitude Long Endurance) verwenden zu können, sieht eine vorteilhafte Ausgestaltung der Erfindung den Einsatz von Verbrennungsmotoren, die Diesel- oder Kerosingetrieben sind und eine Aufladung haben, vor.

Besonders bevorzugt sind diese Verbrennungsmotoren Teil eines Hybridantriebes, insbesondere ist ein Diesel-elektrischer Hybridantrieb vorgesehen.

Diesel- und Kerosinmotoren lassen sich universell einsetzen, z.B. auch als Antriebe von schiffgestützten UAVs. Die entsprechenden Motoren haben einen geringeren Kraftstoffbedarf als Otto-Motoren oder Gasturbinen und ein besseres Teillastverhalten.

Zur energetischen und systemtechnischen Optimierung ist bevorzugt eine Aufladung durch eine Ladereinrichtung vorgesehen.

Werden hierbei für Lader die Abgasenergie der Verbrennungsmotoren benutzt, wie z.B. die Abgasenergie von Dieselmotoren, so lässt sich damit die thermische Signatur wesentlich reduzieren.

Vorzugsweise wird ein derartiger aufgeladener Diesel- oder Kerosinverbrennungsmotor mit elektrischen Komponenten in einem Antriebsstrang für UAVs kombiniert. Dies bietet insbesondere die folgenden Vorteile:
- Es ist z.B. ein rein elektrischer Betrieb im Emissionsgebiet möglich. Der Anflug kann unter Einsatz des Verbrennungsmotors erfolgen, wobei im Emissionsgebiet ein reiner oder weitgehend elektrischer Betrieb erfolgt, um die thermische und akustische Signatur zu reduzieren und so die Sicherheit des Flugzeuges zu erhöhen.
- Es ist ein Boost-Betrieb durch Aufschaltung eines Elektromotors in den mechanischen Triebstrang möglich. Ein solcher Boost-Betrieb kann z.B. für die Start- und/oder Landephase bei kritischen Umweltbedingungen oder zur Flucht oder zu sonstigen Situationen verwendet werden, wo ungewöhnlich hohe Leistungen benötigt werden.

Insbesondere können gemäß einer Ausführungsform der Erfindung UAVs mit Propellerantrieb und/oder Impellerantrieb oder mit Rotoren der Leistungsklasse 30 kW bis 400 kW pro einzelnem Verbrennungsmotor angetrieben werden. Bei erforderlicher höherer Leistung können z.B. mehrere Verbrennungsmotoren eingesetzt werden. Besonders vorteilhaft kommen Diesel-/Kerosin-Kreiskolbenmotoren in Betracht.

Ein solcher Kreiskolbenmotor baut sehr kompakt und - auch bei Einsatz mit Diesel oder Kerosin - relativ leichtgewichtig. Zusätzlich lässt er sich leicht in mehreren Leistungsstufen erstellen. Für eine untere Leistungsstufe ist beispielsweise ein Einscheiben-Kreiskolbenmotor vorsehbar; bei einer größeren Leistungsstufe kommt eine weitere Scheibe zum Einsatz usw.

Eine besonders bevorzugte Ausgestaltung betrifft die Kombination eines derartigen Verbrennungsmotors mit einem Elektromotor und einem elektrischen Energiespeicher zu einem Hybridantrieb, der, vorzugsweise serieller Hybrid oder auch als Parallelhybrid, jeweils unter Vorsehen verschiedener Aufladungskonzepte für den Verbrennungsmotor vorgesehen ist.

Vorzugsweise ist ein UAV mit "heavy fuel"-Brennstoffbetrieb und mit Aufladung vorgesehen. Unter "heavy fuel" wird insbesondere in den USA ein Diesel- und/oder Kerosin-Antrieb verstanden.

Dieselmotoren mit Aufladung sind selbstverständlich zwar in der Automobiltecnikbekannt. Als Beispiel für einen bekannten Dieselmotor mit Aufladung wäre z.B. der 3-Zylinder-Turbodiesel-Motor des "Smart"-PKWs zu nennen, der auch als Einzelmotor auf dem Markt erhältlich ist. Bei der Erfindung wird ein Dieselmotor mit Aufladung oder ein Kerosinmotor mit Aufladung für ein unbemanntes Luftfahrzeug eingesetzt. Dies ist insbesondere bei schiffsgebundener Anwendung der UAV interessant.

Besonders vorteilhaft ist die Aufladung des Verbrennungsmotors. Beispielsweise wird eine Aufladung unter Nutzung der Abgasenergie vorgesehen. Hier kommen insbesondere mit Abgasturbinen gekoppelte Lader - "Turbolader" - zum Einsatz. Insbesondere wird die Abgasenergie zweistufig durch hintereinander geschaltete Abgasturbinen ausgenutzt. Durch Nutzung der Abgasenergie erreicht man eine Verringerung der Abgastemperatur. Dadurch wird die Signatur für eine IR-Erfassung der UAVs verringert.

Weitere Vorteile von mit Diesel oder Kerosin zu betreibenden Motoren sind die gegenüber Otto-Motoren oder Gasturbinen bessere Effizienz sowohl ein besseres Teillastverhalten; außerdem sind derartige Motoren langlebiger. Dieselmotoren geben ihre Nennleistung bei niedrigerer Drehzahl ab.

Besonders bevorzugt ist wenigstens ein erster Lader und ein zweiter Lader vorgesehen, um wenigstens eine zweistufige Aufladung zu ermöglichen.

Für geringere Höhen und geringere Leistung kann der Verbrennungsmotor ohne Aufladung arbeiten. Für etwas höhere Leistungen wird eine erste Stufe der Aufladung zugeschaltet. Für noch höhere Leistungen lässt sich dann die zweite Stufe hinzuschalten. Insbesondere ist eine zweistufige Aufladung mit weiterer Nutzung der Abgasenergie interessant. Eine derartige zweistufige Aufladung ist für höhere Höhen über ca. 4000 m interessant und lässt sich auch für Höhen von ca. 10 000 m bis 12 000 m einsetzen.

Ein weiteres interessantes Konzept ist die mechanische Aufladung. Es ist somit bevorzugt, dass der Verbrennungsmotor als Lader wenigstens einen mechanischen Lader aufweist. Vorteil der mechanischen Aufladung ist, dass der Motor nicht gegen einen Abgasdruck arbeiten muss. Vorzugsweise ist die mechanische Aufladung abkoppelbar. Der Antrieb des mechanischen Laders kann z.B. über eine Antriebswelle des Verbrennungsmotors und/oder über einen elektrischen Antrieb erfolgen. Besonders bevorzugt wird als elektrischer Antrieb der Elektromotor des Hybridantriebes verwendet.

Somit ist eine mehrstufige Aufladung mit und ohne Nutzung der Abgasenergie unter Nutzung von mechanischer Energie aus dem Verbrennungsmotor oder aus dem Elektroantrieb denkbar.

Besonders bevorzugt ist eine Steuerung vorgesehen, die die unterschiedlichen Arten von Antrieben - Elektromotor und/oder Verbrennungsmotor - und/oder die unterschiedlichen Aufladesysteme je nach unterschiedlichen Parametern im Flugbetrieb des UAVs steuert.

Mögliche Parameter hierzu sind die unterschiedlichen Höhen. Diese können beispielsweise über einen Druckgeber erfasst werden. Bei einer derartigen Ausgestaltung der Erfindung weist das UAV einen Druckgeber auf, dessen Signale zur Steuerung des Antriebes verwendet werden. Weitere mögliche Parameter sind z.B. Höhe und/oder Schnellflug. Ein weiterer Parameter kann die Leistung für den Start- und/oder Landebetrieb sein. Mit einem derartigen Antriebskonzept können sowohl UAVs der MALE-Klasse als auch UAVs der HALE-Klasse mit großer Funktionsvielfalt und einem großen Bereich von Einsatzmöglichkeiten betrieben werden.

Ausführungsbeispiele der Erfindung werden nachfolgend anhand der beigefügten Zeichnungen näher erläutert. Darin zeigt:
- Fig. 1: eine schematische Seitenansicht auf ein unbemanntes Luftfahrzeug in einer ersten Ausführungsform mit einem als serieller Hybridantrieb ausgebildeten Antrieb mit Steuerung;
- Fig. 2: eine erste Ausführungsform des Luftfahrzeuges von Fig. 1 in einer Konfiguration für größere Höhen;
- Fig. 3: eine zweite Ausführungsform des unbemannten Luftfahrzeuges von Fig. 1 in einer Konfiguration für geringere maximale Flughöhen;
- Fig. 4: einen Bausatz zum Herstellen der unbemannten Luftfahrzeuge gemäß den Fig. 1 bis 3;
- Fig. 5: schematische perspektivische Darstellungen von zwei unbemannten Luftfahrzeugen unterschiedlicher Konfiguration, die mit dem Bausatz von Fig. 4 herstellbar sind;
- Fig. 6: das unbemannte Luftfahrzeug von Fig. 1 mit einer schematischen Darstellung eines als Parallel- oder seriellen Hybridantrieb ausgebildeten Antriebes und einer Steuerung hierfür;
- Fig. 7: eine schematische Darstellung einer ersten Ausführungsform eines Antriebes für das unbemannte Luftfahrzeug gemäß Fig. 6;
- Fig. 8: eine schematische Darstellung der ersten Ausführungsform des Antriebes in einem ersten Betriebsmodus;
- Fig. 9: eine schematische Darstellung der ersten Ausführungsform des Antriebes gemäß Fig. 7 in einem zweiten Betriebsmodus;
- Fig. 10: eine schematische Darstellung der ersten Ausführungsform des Antriebes gemäß Fig. 7 in einem dritten Betriebsmodus;
- Fig. 11: eine schematische Darstellung einer zweiten Ausführungsform des Antriebes für eines der unbemannten Luftfahrzeuge gemäß Fig. 6;
- Fig. 12: eine schematische Darstellung der zweiten Ausführungsform des Antriebes gemäß Fig. 11 in einem ersten Betriebsmodus;
- Fig. 13: eine schematische Darstellung der zweiten Ausführungsform des Antriebes gemäß Fig. 11 in einem zweiten Betriebsmodus;
- Fig. 14: eine schematische Darstellung der zweiten Ausführungsform des Antriebes gemäß Fig. 11 in einem dritten Betriebsmodus;
- Fig. 15: eine schematische Darstellung einer dritten Ausführungsform eines Antriebes für eines der unbemannten Luftfahrzeuge gemäß den Fig. 1 bis 6;
- Fig. 16: eine schematische Darstellung der dritten Ausführungsform des Antriebes von Fig. 15 in einem ersten Betriebsmodus;
- Fig. 17: eine schematische Darstellung der dritten Ausführungsform des Antriebes von Fig. 15 in einem zweiten Betriebsmodus;
- Fig. 18: eine schematische Darstellung der dritten Ausführungsform des Antriebes von Fig. 15 in einem dritten Betriebsmodus;
- Fig. 19: eine schematische Darstellung der dritten Ausführungsform des Antriebes von Fig. 15 in einem vierten Betriebsmodus;
- Fig. 20: eine schematische Darstellung der dritten Ausführungsform des Antriebes von Fig. 12 in einem fünften Betriebsmodus und
- Fig. 21: ein schematisches Diagramm zur Darstellung einer Steuerung des Antriebes des unbemannten Luftfahrzeuges aufgrund unterschiedlicher Parameter im Flugbetrieb.

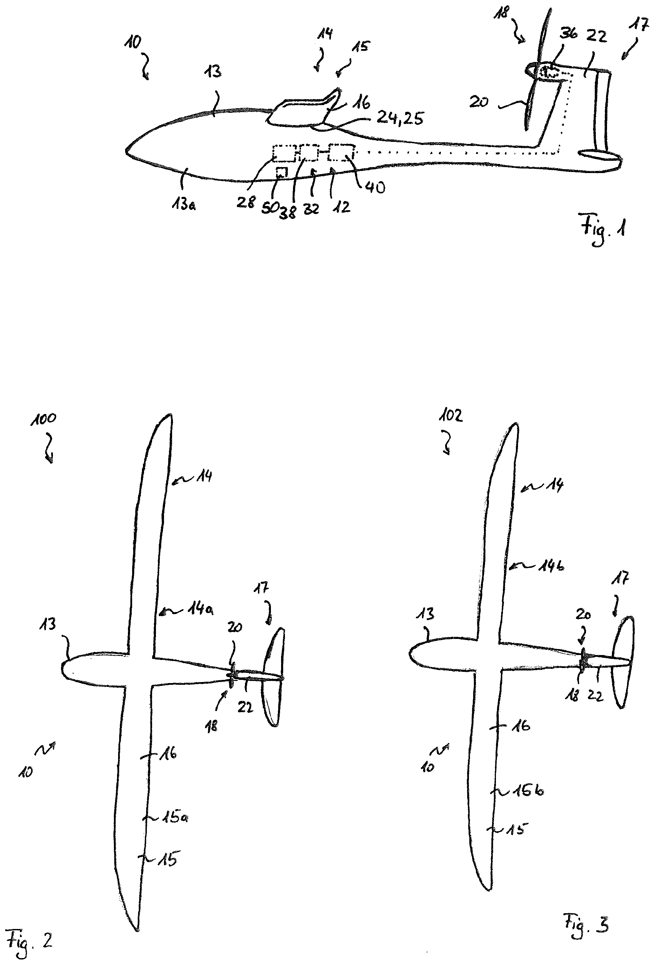

In den Fig. 1 bis 6 sind unterschiedliche Ausführungsformen von unbemannten Luftfahrzeugen 10 sowie ein Bausatz zum Herstellen der unterschiedlichen Ausführungsformen, teils mit einer Andeutung eines jeweiligen Antriebes 12 dargestellt.

Unbemannte Luftfahrzeuge 10 werden auch Drohnen oder auch in der Fachsprache UAV genannt. Sie sind Teil eines Systems zur unbemannten Luftfahrt - UAS genannt -, mit dem militärische und zivile Operationen, wie insbesondere Aufklärungsflüge, Überwachungsfunktionen oder Messfunktionen, durchgeführt werden können. Das UAS hat neben den gezeigten unbemannten Luftfahrzeugen 10 noch weiter nicht dargestellte, aber hinlänglich bekannte Systemkomponenten, wie beispielsweise der bodengestützte Steuerungsstand, mit dem das UAV fernbedient bedienbar ist, und entsprechende Kommunikationseinrichtungen zur Kommunikation zwischen dem unbemannten Luftfahrzeug 10 und dem Steuerstand. Es wird für weitere Einzelheiten zu UAS auf die eingangs erwähnte Druckschrift Reg Austin, "Unmanned Aircraft Systems - UAS design, development and deployment", Wiley Verlag 2010, verwiesen.

Die unbemannten Luftfahrzeuge gemäß der Fig. 1 bis 6 beruhen von der Grundkonzeption her auf dem Konstruktionsprinzip für elektrisch angetriebene Motorsegelflugzeuge, wie sie unter dem Namen "e-Genius" von der Universität Stuttgart konzipiert worden ist. Ein Erstflug eines elektrisch betriebenen Motorseglers der e-Genius-Konfiguration fand am 25. Mai 2011 statt.

Basierend auf der Grundkonzeption als Motorsegler weist das unbemannte Luftfahrzeug 10 eine Rumpfstruktur 13, eine Auftriebserzeugungsstruktur 14 in Form einer Tragflügelstruktur 15 mit feststehenden Tragflächen 16, ein Leitwerk 17 sowie einen Schuberzeuger 18, hier in Form eines Propellers 20, auf, der an einer Seitenflosse 22 des Leitwerks 17 angebracht ist.

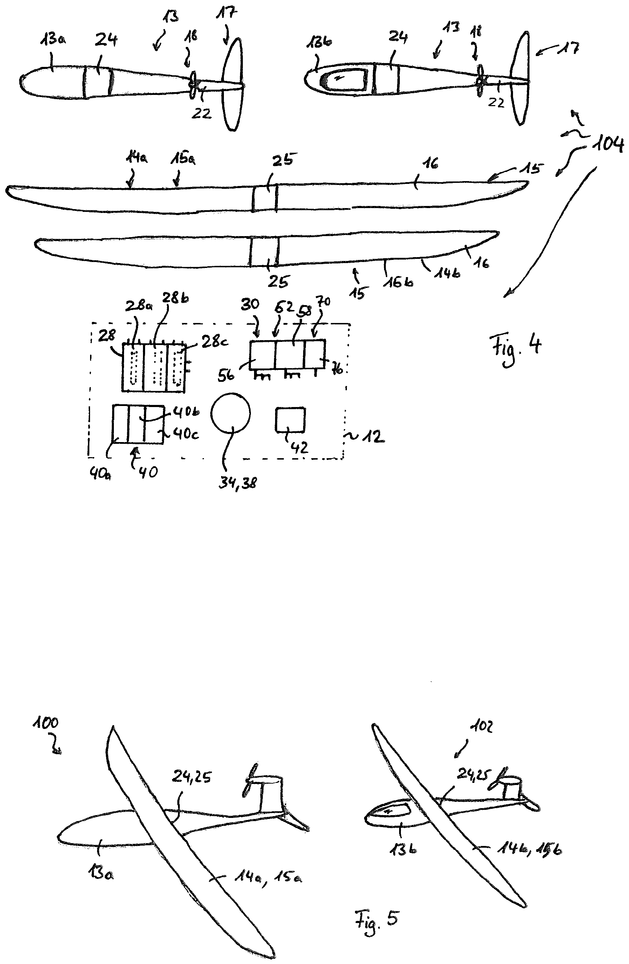

Wie das Grundkonzept e-Genius ist das unbemannte Luftfahrzeug 10 ein Schulterdecker in Faserverbundbauweise mit Einziehfahrwerk. Bei dem e-Genius ist die Rumpfstruktur 13 mit einem Cockpit mit zwei Sitzen ausgebildet. Die Sitzanordnung im Cockpit bei dem e-Genius ist side-by-side, also nebeneinander. Ausgehend von dieser Grund-Rumpfstruktur 13 ist bei den hier in Rede stehenden unbemannten Luftfahrzeugen 10 eine erste Rumpfstruktur 13a ganz ohne Cockpit vorgesehen, bei denen der gesamte ursprünglich für Passagiere und Piloten konzipierte Raum mit Nutzlast belegt werden kann. Bei einer zweiten Rumpfstruktur 13b ist Platz für einen optionalen Piloten vorgesehen, wobei das unbemannte Luftfahrzeug 10 wahlweise ganz unbemannt als UAV betrieben werden kann oder durch einen mitfliegenden Piloten gesteuert werden kann. Diese unterschiedlichen Konzepte sind in Fig. 5 angedeutet.

Wie ein Vergleich der Fig. 2 und 3 zeigt, ist ein modulares Konzept vorgesehen, so dass basierend auf der Basisrumpfstruktur 13 mit unterschiedlichen Auftriebserzeugungsstrukturen 14a, 14b unterschiedliche Ausführungsformen des unbemannten Luftfahrzeuges 10 geschaffen werden kann. Fig. 2 zeigt dabei ein erstes UAV 100, das der MALE-Klasse für maximale Flughöhen oberhalb von etwa 10 000 m und vorzugsweise mit entsprechenden leistungsgesteigertem Antrieb auch für die HALE-Klasse für maximale Reiseflughöhen oberhalb von 15 000 m konzipiert ist. Fig. 3 zeigt ein zweites UAV 102, welches der MALE-Klasse angehört und je nach gewähltem Antrieb maximale Reiseflughöhen bis etwa 10 000 m erreichen kann.

Fig. 4 zeigt einen Bausatz 104 zum Aufbau der unbemannte Luftfahrzeuge 10, um wahlweise das erste UAV 100 oder das zweite UAV 102 herzustellen.

Der Bausatz 104 gemäß Fig. 4 umfasst wenigstens die erste Rumpfstruktur 13, 13a oder auch - wie hier als weiteres Beispiel dargestellt - die erste Rumpfstruktur 13a und die zweite Rumpfstruktur 13b mit unterschiedlichen Nutzlastkonzepten - nur Nutzlast oder Nutzlast und optionaler Pilot. Die Rumpfstrukturen 13, 13a, 13b haben alle eine gleich ausgestellte Auftriebserzeugungsstrukturbefestigungsschnittstelle 24, an welcher unterschiedliche Auftriebserzeugungsstrukturen 14, 14a, 14b wahlweise befestigbar sind.

Der Bausatz 104 weist weiter mehrere unterschiedliche Auftriebserzeugungsstrukturen 14, 14a, 14b auf. Als Beispiel liegen hier unterschiedliche Tragflügelstrukturen 15, 15a, 15b mit einer ersten Tragflügelstruktur 15a zum Herstellen des ersten UAVs 100 und einer zweiten Tragflügelstruktur 15b zum Herstellen des zweiten UAVs 102 vor. Alle unterschiedlichen Auftriebserzeugungsstrukturen 14, 14a, 14b des Bausatzes 104 weisen stets gleich ausgebildete Rumpfstrukturbefestigungsschnittstellen 25 auf, die komplementär zu der Auftriebserzeugungsstrukturbefestigungsschnittstelle 24 ausgebildet sind, um so die Auftriebserzeugungsstrukturen formschlüssig und gesichert an der jeweiligen Rumpfstruktur 13, 13a, 13b zu befestigen. Die Befestigungsschnittstellen 24, 25 können z.B. durch Vorsprung-Rücksprung-Strukturen, durch Hakenstrukturen, durch Verschraubungen oder dergleichen bekannte Maßnahmen ausgebildet sein. Vorzugsweise sind die Befestigungsschnittstellen 24, 25 zur lösbaren Befestigung vorgesehen. Entsprechende Konzepte sind im Segelflugzeugbau Standard, um Segelflugzeuge auch auf der Straße transportierbar zu halten. Auf eine genauere Beschreibung kann daher hier verzichtet werden.

Der Bausatz von Fig. 4 weist weiterhin Baugruppen eines modularen Antriebes 12 mit einem modular aufgebauten Verbrennungsmotor 28, einer modular aufgebauten Ladereinrichtung 30, einem modular aufgebauten elektrischen Energiespeicher 40, einer elektrischen Maschine 34 oder einem getrennt vorgesehenen Elektromotor 36 und einem Generator 38, und einer Leistungselektronik 42 auf.

Der Verbrennungsmotor 28 ist beispielsweise ein modular aufgebauter Kreiskolbenmotor, der wahlweise aus einem ersten Verbrennungsmotormodul 28a, einem zweiten Verbrennungsmotormodul 28b und einem dritten Verbrennungsmotormodul 28c aufbaubar ist.

Die Ladereinrichtung 30 ist ebenfalls modular mit einem Kompressormodul und unterschiedlichen Antriebsmodulen für den Kompressor vorgesehen, um so wahlweise eine Aufladung vorzusehen oder nicht und bei Vorsehen einer Aufladung wahlweise eine einstufige Aufladung oder eine zweistufige Aufladung oder unterschiedliche Aufladungen je nach Bedarf vorzusehen.

Auch der elektrische Energiespeicher 40 ist vorzugsweise modular aufgebaut, was in Fig. 4 durch die Darstellung eines ersten Batteriemoduls 40a, eines zweiten Batteriemoduls 40b und eines dritten Batteriemoduls 40c angedeutet ist.

In dem in Fig. 1 dargestellten unbemannten Luftfahrzeug 10 ist der Antrieb 12 als Hybridantrieb 32 in serieller Bauweise mit einem an dem Schuberzeuger 18 - Propeller 20 - angeordneten Elektromotor 36 vorgesehen, der allein zur Bewegung des Schuberzeugers 18 eingesetzt wird. Die Energie hierzu kommt von dem elektrischen Energiespeicher 40. Weiter ist der Verbrennungsmotor 28 zum Antreiben des Generators 38 vorgesehen, um den elektrischen Energiespeicher 40 während des Fluges aufzuladen und/oder die Energie für den Elektromotor 36 zu liefern. Der Verbrennungsmotor 28 wirkt somit bei dem seriellen Hybridantrieb 32 von Fig. 1 als reiner Range Extender.

Der Betrieb des Antriebes 12 wird über die Steuerung 50 gesteuert.

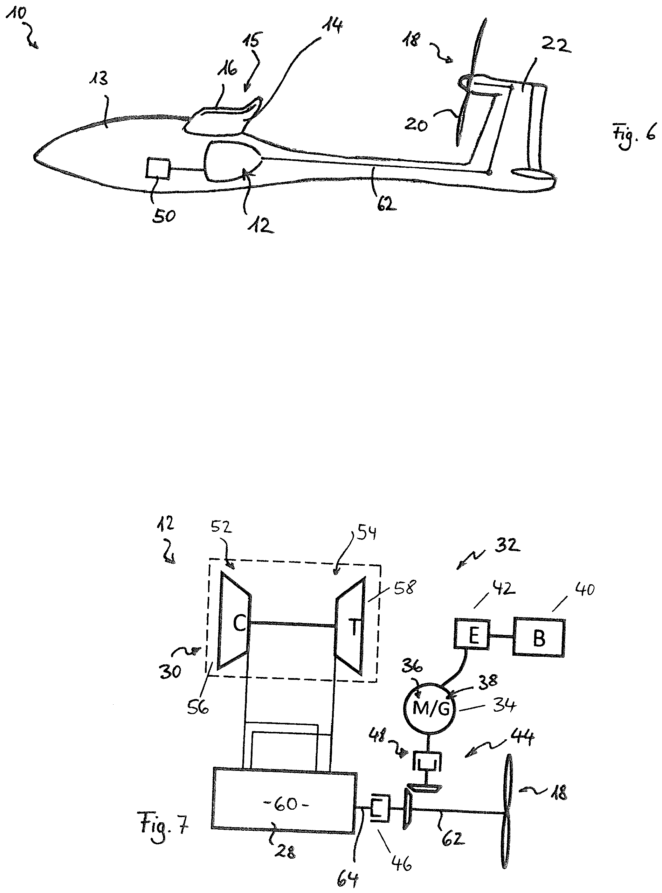

Dagegen ist bei dem in Fig. 6 dargestellten Ausführungsbeispiel des unbemannten Luftfahrzeuges 10 der Antrieb 12 allgemeiner dargestellt. Hier können z.B. Hybridantriebe 32 in unterschiedlicher Konfiguration eingesetzt werden, wobei die Antriebskraft des Antriebes 12 durch eine Abtriebswelle 62 zu dem Schuberzeuger 18 geleitet wird.

Der Vorteil des seriellen Hybrid von Fig. 1 liegt unter anderem darin, dass nur eine elektrische Leitung durch den Rumpf zu dem Schuberzeuger 18 geführt werden muss, an dessen Nabe der Elektromotor 36 sitzt. Durch die Ausbildung als Range Extender kann der Verbrennungsmotor 28 mit kleinerer Leistung ausgeführt sein und somit leichtgewichtig bauen.

Der Vorteil der Ausführung der Fig. 6 liegt in dem modularen Aufbau, der auch Hochleistungsantriebskonzepte und unterschiedliche Betriebsweisen erlaubt.

Durch die Auswahl der ersten Rumpfstruktur 13a oder der zweiten Rumpfstruktur 13b und die Auswahl der ersten Auftriebserzeugungsstruktur 14a oder der zweiten Auftriebserzeugungsstruktur 14b und die entsprechende Befestigung von Auftriebserzeugungsstruktur 14 an die Rumpfstruktur 13 über die Befestigungsschnittstellen 24, 25 lassen sich die unterschiedlichen UAVs 100, 104 erstellen, wie dies in Fig. 5 angedeutet ist.

Bei der Herstellung wird weiter je nach Bedarf an Motorleistung aus dem modularen Antrieb 12 der jeweils passende Motor zusammengestellt und als Antrieb für den Schuberzeuger 18 vorgesehen, wie dies in den Fig. 1 und Fig. 6 angedeutet ist. Der Antrieb 12 wird dann über eine Steuerung 50 gemäß Flugparametern gesteuert.

Mit dem Bausatz 104 der Fig. 4 lässt sich somit eine Familie von Hochleistungs-Hybridantriebs-UAVs 100, 104 herstellen.

Damit lässt sich ein UAS mit einem breiten Bereich von Einsatzmöglichkeiten mit einem hybridgetriebenen UAV 100, 102 schaffen. Die modulare Spannweite und das gemeinsame Familienkonzept der Rumpfstrukturen und des gesamten UAVs 100, 102 ermöglichen die Anpassungsfähigkeit an einen breiten Bereich von möglichen Einsatzfunktionen mit Hinblick auf unterschiedliche erforderliche Nutzlasten, Reichweite und Betriebsflughöhe. Ein Hauptvorteil eines Hybridantriebes 32 für ein Hochleistungs-UAV ist eine größere Flexibilität bei unterschiedlichen Einsatzszenarien und der Möglichkeit eines sehr ruhigen, rein elektrischen Flug innerhalb des Zielgebietes. Dies ermöglicht eine geringe Möglichkeit einer Erfassung des UAVs 100, 102 aufgrund der geringen Geräuschemissionen, der Nullemission von Abgasen und der geringen Infrarot-Signatur innerhalb des Zielgebietes.

Das unbemannte Luftfahrzeug 10 basiert auf einem Grundflugzeug wie z.B. auf dem Forschungsflugzeug "e-Genius", das an der Universität Stuttgart in Kooperation mit der Firma Steinbeis Flugzeug- und Leichtbau GmbH im Jahre 2011 entwickelt worden ist und in der Fachliteratur gut dokumentiert ist. Das Flugzeug e-Genius nahm im Herbst 2011 in Californien an der Green Flight Challenge der Comparative Aircraft Flight Efficiency (CAFE) teil und gewann den Lindbergh-Preis (LEAP) für das leiseste Flugzeug im gesamten Wettbewerb. Außerdem erzielte es in der Gesamtwertung den zweiten Platz.

Das Grundkonzept des e-Genius hat eine Spannweite von 17 m und ist mit einem Elektromotor mit 60 kW Leistung und einer Batterie mit einer Kapazität von 56 kW/h bei einem Gewicht von 280 kg versehen. Rein mit dieser Batterieleistung wurde durch Flugtests erwiesen, dass ein Streckenflug von etwa 500 km oder eine Flugdauer von mehr als 4 Stunden rein mit Batterieleistung möglich ist.

Das zweite UAV 102, welches in Fig. 3 sowie in Fig. 5 rechts gezeigt ist, basiert auf diesem Grundkonzept mit einer Spannweite von 17 m. Bei dem ersten UAV 100 der Fig. 2 und der Fig. 5 links ist eine Tragflächenstruktur 15a mit einer Spannweite von 23 m vorgesehen.

Als Elektromotor 36 wird z.B. ein wassergekühlter 60 kW-Elektromotor der Firma Sinetron mit Inverter vorgesehen. Der Propeller 20 kann ein Konstant-Geschwindigkeitspropeller sein.

Der elektrische Energiespeicher 40 ist beispielsweise aufgebaut als Lithium-Ionen-Batterie mit einer Kapazität von 28 kW/h und einem Gewicht von 180 kg.

Der z.B. als Range Extender eingesetzte Verbrennungsmotor 28 kann in der geringsten Leistungsstufe ein 30 kW-Rotationskolbenmotor mit Abgasturbolader-Aufladung, versehen mit Generator 38 und mit Batterieladungselektronik, und einem Gesamtgewicht von 50 kg sein.

Als Tank für den Betriebsbrennstoff, welcher Kerosin oder Diesel sein kann, ist ein Tank mit einem Volumen von 108 Liter vorgesehen.

Eine solche Konfiguration mit Hybridantrieb 32 ermöglicht sehr leise Missionen mit äußerst geringer IR-Signatur, lange Betriebsdauern und einer hohen Flexibilität zum Erreichen höchst unterschiedlicher Missionen oder Einsatzfunktionen.

### Eine typische Mission des unbemannten Luftfahrzeuges 10 kann z.B. sein:

Ein Start- und Steigflug wird unter Verwendung des Elektromotors und Lieferung von Energie durch den Range-Extender-Verbrennungsmotor 28 geliefert.

Ein Reiseflug wird z.B. bei 200 km/h durchgeführt. Dieser ist für mehr als 10 Stunden möglich. Bereits in einer kleinen Leistungsklasse ist eine Reichweite von 2000 km während des normalen Reisefluges möglich. Während des Reisefluges wird der elektrische Energiespeicher 40 voll geladen. Im Einsatzgebiet ist ein reiner elektrisch betriebener Flug ohne Emissionen und ohne Hitzeerzeuger mit geringer Geräuschentwicklung für bis zu 1,6 Stunden möglich. Anschließend kann der Range Extender erneut gestartet werden, und weitere 10 Stunden Reiseflug zurück zur Heimbasis sind möglich.

Unter Verwendung der Konfiguration des ersten UAVs 100 mit der größeren Spannweite sind noch längere Missionen oder Missionen bei größeren Höhen möglich.

Unter Verwendung der ersten Rumpfstruktur 13a und der zweiten Rumpfstruktur 13b sowie der ersten Tragflügelstruktur 15a und der zweiten Tragflügelstruktur 15b des Bausatzes 104 der Fig. 4 lassen sich z.B. folgende Familienmitglieder der Familien von unbemannten Luftfahrzeugen 10 herstellen:

### Zweites UAV 102, rein unbemannt (hy-Genius 17):

Hier wird die erste Rumpfstruktur 13a ohne Möglichkeit eines Pilotenmitfluges mit der zweiten Auftriebserzeugungsstruktur 14b mit der kleineren Spannweite von 17 m kombiniert. Dies ergibt das zweite UAV 102 mit einer Spannweite von 17 m ohne Manualsteuerung und ohne Glasabdeckung am Cockpit. Die Nutzlast ist z.B. - ausgehend von dem derzeitigen Forschungsflugzeug e-Genius - 235 kg.

### Zweites UAV 102 mit optionalem Pilot (hy-Genius 17 OPV):

Hier wird die zweite Rumpfstruktur 13b mit der zweiten Auftriebserzeugungsstruktur 13b verbunden. Dies ergibt ein unbemanntes Luftfahrzeug 10 mit einer Spannweite von 17 m, das optional auch durch einen Pilot gesteuert werden kann. Ein Pilot kann das Luftfahrzeug 10 in jedem Luftraum fliegen. Gefährliche Missionen können unbemannt durchgeführt werden. Unbemannt ist die Leistungsfähigkeit aufgrund des geringeren Gewichts des Luftfahrzeuges 10 sogar besser. Die Nutzlast für die Einsatzmission beträgt - ausgehend von dem Forschungsflugzeug e-Genius - 120 kg plus 100 kg für den Piloten.

### Erstes UAV 100 ohne optionalen Pilot (hy-Genius 23):

Wird die erste Rumpfstruktur 13a mit der ersten Tragflügelstruktur 15a kombiniert, dann ergibt dies eine Version des unbemannten Luftfahrzeuges 10 mit einer vergrößerten Flügelspannweite von 23 m. Dies ermöglicht höheren Betriebsflughöhen und eine vergrößerte Reichweite. Jedoch ist aufgrund des höheren Gewichts für die Grundkonstruktion die Einsatz-Nutzlast auf 125 kg reduziert.

### Erstes UAV 100 mit optionalem Pilot (hy-Genius 23 OPV):

Wird die zweite Rumpfstruktur 13b mit der ersten Tragflügelstruktur 15a zusammen verwendet, gibt dies die optional mit Piloten fliegbare Version des ersten UAVs 100 mit vergrößerter Flügelspannweite von 23 m. Dies ergibt eine Nutzlast von 80 kg zuzüglich etwa 100 kg für den Piloten.

Die technischen Daten der derzeit bevorzugten Ausführungsformen des unbemannten Luftfahrzeuges 10 sind in der folgenden Tabelle 1 wiedergegeben.

**Tabelle 1**

| | hy-Genius 17 | hy-Genius 17 OPV | hy-Genius 23 | hy-Genius 23 OPV |
|---|---|---|---|---|
| Flügelspannweite | 16,85 m | 16,85 m | 23 m | 23 m |
| Flügelfläche | 14,10 m² | 14,10 m² | 17,9 m² | 17,9 m² |
| Länge | 8,10 m | 8,10 m | 8,10 m | 8,10 m |
| Elektromotor | max. 60 kW | max. 60 kW | max. 60 kW | max. 60 kW |
| Batteriekapazität (Lithium-lon) | 28 kWh | 28 kWh | 28 kWh | 28 kWh |
| Hybrid kreiskolben motor (Kerosin oder Diesel, Wankel) | max. 30 kW | max. 30 kW | max. 30 kW | max. 30 kW |
| max. Brennstoffkapazität | 108 l | 108 l | 108 l | 108 l |
| max. Startgewicht | 950 kg | 950 kg | 950 kg | 950 kg |
| Einsatz Nutzlast | 235 kg | 120 kg+100 kg Pilot | 195 kg | 80 kg+100 kg Pilot |
| Startstrecke | 580 m | 580 m | 400 m | 400 m |
| Landestrecke | 380 m | 380 m | 310 m | 310 m |
| max. Reiseflughöhe | 27000 ft | 27000 ft | 34000 ft | 34000 ft |
| max. Reisefluggeschwindigkeit | 230 km/h 124kts | 230 km/h 124kts | 218 km/h 118kts | 218 km/h 118kts |
| max. Flugstrecke mittels Kraftstoff | 4390 km 2370 nm | 4390 km 2370 nm | 5480 km 2960 nm | 5480 km 2960 nm |
| max. Flugdauer mittels Kraftstoff bei FL100/FL200/FL300 | 25h/21,5h/17,8h | 25h/21,5h/17,8h | 38h/32h/27h | 38h/32h/27h |
| max. Flugdauer rein mit Batterieleistung bei FL100/FL200/FL300 | 1,8h/1,6h/1,3h | 1,8h/1,6h/1,3h | 2,6h/2,2/1,8h | 2,6h/2,2h/1,8h |

Unterschiedliche Ausführungsbeispiele für den Antrieb 12 werden im Folgenden anhand der Fig. 7 bis 20 näher erläutert.

Bei allen drei hier dargestellten unterschiedlichen Ausführungsformen des Antriebes 12 ist dieser mit einem für Diesel- und/oder Kerosin-Betrieb ausgebildeten Verbrennungsmotor 28 und mit einer Ladereinrichtung 30 zur Aufladung des Verbrennungsmotors 28 versehen.

Der Antrieb 12 ist weiter in allen drei hier dargestellten Ausführungsbeispielen ein Hybridantrieb 32. Der Hybridantrieb 32 weist neben dem Verbrennungsmotor 28 eine elektrische Maschine 34 auf. Die elektrische Maschine 34 lässt sich in einer Betriebsart als Elektromotor 36 nutzen, was in den Zeichnungen durch den Buchstaben M angedeutet ist, und in einer weiteren Betriebsart als elektrischer Generator 38 nutzen, was in den Zeichnungen durch den Buchstaben G angeordnet ist. In weiteren, hier nicht näher dargestellten Ausführungsformen kann die elektrische Maschine 34 entweder ein Elektromotor oder ein Generator sein. In weiteren, später noch näher erläuterten Ausführungsformen sind ein getrennter Elektromotor 36, M und ein getrennter Generator 38, G vorgesehen.

Der Hybridantrieb 32 weist weiter einen elektrischen Energiespeicher 40 auf, der beispielsweise als Anordnung von aufladbaren Batteriezellen oder als Akkumulatoranordnung ausgebildet ist und in den Zeichnungen auch mit "B" gekennzeichnet ist. Die elektrische Maschine 34 ist über eine Leistungselektronik 42, E an den elektrischen Energiespeicher 40, B angeschlossen.

Der Hybridantrieb 32 ist in den dargestellten Ausführungsformen als Parallelhybrid ausgebildet, wobei wahlweise der Verbrennungsmotor 28 oder der Elektromotor 36 zum Antreiben des unbemannten Luftfahrzeugs 10 nutzbar sind, oder sowohl der Verbrennungsmotor 28 als auch der Elektromotor zum gemeinsamen Antreiben nutzbar sind. Hierzu ist eine schaltbare Kupplungseinrichtung 44 vorgsehen, mit der wahlweise der Verbrennungsmotor 28 und die elektrische Maschine 34 an eine mit dem Schuberzeuger 18 verbundene Abtriebswelle 62 ankoppelbar sind. Die schaltbare Kupplungseinrichtung 44 weist eine erste Kupplung 46 zum Ankuppeln des Verbrennungsmotors 28 und eine zweite Kupplung 48 zum Ankuppeln der elektrischen Maschine 34 auf. Die Kupplungseinrichtung 44 und die Ladereinrichtung 30 sind durch eine Steuerung 50 - siehe Fig. 6 - abhängig von unterschiedlichen Parametern im Flugbetrieb steuerbar, wie dies hiernach noch näher erläutert wird. "Kupplung" bezeichnet hier einen Oberbegriff für Einrichtungen, mit denen sich Drehmomente wahlweise übertragen lassen (Kupplung ist eingerückt) oder abgeschaltet werden (Kupplung ist ausgerückt).

Wie man weiter den Fig. 7 bis 20 entnehmen kann, weist die Ladereinrichtung 30 wenigstens einen ersten Lader 52 zur Aufladung des Verbrennungsmotors 28 auf. Der erste Lader 52 kann als Abgasturbolader 54 zur Ausnutzung der Abgasenergie zwecks Aufladung ausgebildet sein.

Insbesondere weist die Ladereinrichtung 30 einen Kompressor 56 zur Druckerzeugung auf, um Verbrennungsluft mit erhöhtem Druck zu dem Verbrennungsmotor 28 zu liefern.

Der Kompressor 56 ist mit einer ersten Abgasturbine 58 koppelbar, um so den Abgasturbolader 54 als ersten Lader 52 zu bilden.

Der Verbrennungsmotor 28 weist in bevorzugter Ausgestaltung einen Kreiskolbenmotor 60 auf. Der Kreiskolbenmotor 60 ist insbesondere derart ausgebildet, wie er in der deutschen Patentanmeldung DE 10 2012 101 032.3 beschrieben und gezeigt ist, und ist demgemäß für den Betrieb mit Diesel oder Kerosin ausgelegt. Je nach erwünschter Leistungsstufe für das unbemannte Luftfahrzeug 10 ist der Kreiskolbenmotor 60 als Einscheiben-Kreiskolbenmotor, als Zweischeiben-Kreiskolbenmotor oder als Dreischeiben-Kreiskolbenmotor oder als Mehrscheinben-Kreiskolbenmotor ausgebildet. Die Konfiguration als Kreiskolbenmotor 60 weist hierzu eine besondere Fähigkeit zur Modulariät auf, so dass durch geringen Aufwand eine oder mehrere Scheiben vorgesehen werden können.

Während zuvor die gemeinsamen Elemente der hier dargestellten Ausführungsformen des Antriebes 12 erläutert worden sind, wird im Folgenden auf die Unterschiede der hier dargestellten Ausführungsformen näher eingegangen.

Fig. 7 bis 10 zeigen ein erstes Ausführungsbeispiel für den Antrieb 12 mit einer einstufigen Aufladung, wobei lediglich der erste Lader 52 in Form des Abgasturboladers 54 mit dem Kompressor 56, C und der an den Kompressor 56 angeschlossenen ersten Abgasturbine 58, T dargestellt ist. Der Verbrennungsmotor 28 und die elektrische Maschine 34 sind wahlweise über die erste Kupplung 46 und die zweite Kupplung 48 an die Abtriebswelle 62 und damit den Schuberzeuger 18 anschließbar.

Der Antrieb 12 weist somit den Verbrennungsmotor 28 auf, der als Dieselmotor und als Wankelmotor ausgebildet sein kann und mit einem Aufladesystem in Form der Ladereinrichtung 30 mit dem Kompressor 56 und der ersten Abgasturbine 58 versehen ist. Die Motorabtriebswelle 64 ist über die erste Kupplung 46 mit dem Schuberzeuger 18 verbindbar. Der Generator 38 und der Elektromotor 36 oder - wie hier dargestellt - die als Generator G oder als Elektromotor M betreibbare elektrische Maschine 34 sind über eine elektronische Regelungseinheit - Leistungselektronik 42, E - mit einer Pufferbatterie - elektrischer Energiespeicher 40, B - verbunden, welche abwechselnd im Generatorbetrieb geladen oder zur Versorgung der elektrischen Maschine 34 im Elektromotorbetrieb mit elektrischer Energie zu verwenden ist.

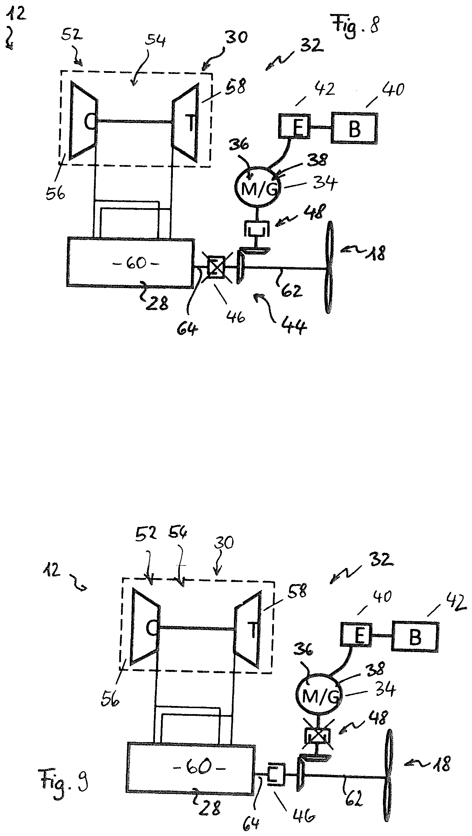

Fig. 8 zeigt einen ersten Betriebsmodus, bei dem der Hybridantrieb 32 im reinen Elektrobetrieb betrieben wird. Hierzu ist die erste Kupplung 46 ausgerückt und die zweite Kupplung 48 eingerückt.

Fig. 9 zeigt den "konventionellen" Betrieb, bei dem die Antriebsleitung des Hybridantriebes 32 allein durch den Verbrennungsmotor 28 bereitgestellt wird. Hierzu ist die erste Kupplung 46 eingerückt und die zweite Kupplung 48 ausgerückt.

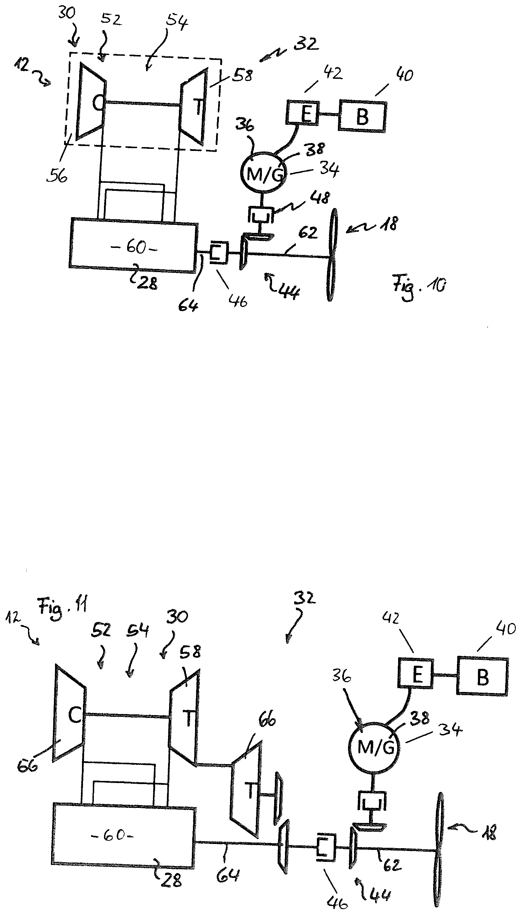

Bei dem in Fig. 10 gezeigten dritten Betriebsmodus sind sowohl die erste Kupplung 46 als auch die zweite Kupplung 48 eingerückt und somit sind sowohl der Verbrennungsmotor 28 als auch die elektrische Maschine 34 mit der Abtriebswelle 62 und somit auch untereinander verbunden. In diesem dritten Modus kann beim Betreiben der elektrischen Maschine 34 als Elektromotor M eine elektrische Booster-Funktion - also ein Erhöhen der Systemleistung durch zusätzliche elektrische Energie - oder bei Generatorfunktion G der elektrischen Maschine 34 eine Ladebetrieb durchgeführt werden.

Somit sind durch den dargestellten Aufbau der ersten Ausführungsform des Hybridantriebes 32, wie er in den Fig. 7 bis 10 dargestellt ist, zumindest vier folgende Betriebszustände möglich:
a) Konventioneller Betrieb: Der Verbrennungsmotor 28 treibt den Schuberzeuger 18 an, während Generator G und Elektromotor M abgekoppelt sind. Dies entspricht dem Betriebsmodus bisheriger UAV-Antriebssysteme auf Basis von Verbrennungsmotoren.
b) "Elektrischer Boost": Zusätzlich zum Verbrennungsmotor 28 wird der Elektromotor M an die Abtriebswelle 62 angekoppelt. Hierdurch kann ein zusätzliches Drehmoment auf die Abtriebswelle 62 übertragen werden, wodurch für kurze Zeit - abhängig von der Kapazität des elektrischen Energiespeichers 40 - zusätzliche Leistung zur Verfügung gestellt wird und hierdurch Spitzen im Leistungsbedarf abgefangen werden können.
c) "Lademodus": In Betriebsphasen, welche nicht die gesamte Motorleistung des Verbrennungsmotors 28 für den Schuberzeuger 18 benötigen, kann ein Teil der zur Verfügung stehenden Leistung an den Generator G abgegeben werden, um den elektrischen Energiespeicher 40 wieder aufzuladen.
d) "Rein elektrischer Betrieb": Zusätzlich zu den zuvor genannten Betriebsmoden kann auch der Verbrennungsmotor 28 abgekoppelt und abgeschaltet werden, um auf einen rein elektrischen Betrieb umzuschalten. Hier wird nun der Elektromotor E an die Abtriebswelle angekoppelt, welcher von dem elektrischen Energiespeicher B mit elektrischer Energie versorgt wird.

### Dies bietet insbesondere die folgenden Vorteile:

Die Funktionalität eines Parallel-Hybrids erlaubt den rein elektrischen Betrieb zur Reduzierung der thermischen und akustischen Signatur in kritischen Missionsphasen. Gleichzeitig kann im konventionellen Betrieb die hohe Energiespeicherdichte von fossilen Brennstoffen ausgenutzt werden, um Reichweiten darzustellen, die durch einen reinen Elektroantrieb nicht zur Verfügung stehen. Ergänzend bietet das System die Möglichkeit, Batterien wieder im Flug zu laden, wobei durch eine Lastpunktanhebung des Verbrennungsmotors 28 ein effizienter Betriebszustand des Verbrennungsmotors 28 gewählt werden kann.

In den Fig. 11 bis 14 ist eine zweite Ausführungsform des Hybridantriebes 32 dargestellt. Diese zweite Ausführungsform entspricht im Wesentlichen der ersten Ausführungsform bis auf den Unterschied, dass die zweite Ausführungsform zusätzlich zu der ersten Abgasturbine 58, T noch eine zweite Abgasturbine 66, T aufweist, die an die Motorabtriebswelle 64 und/oder die Abtriebswelle 62 angekoppelt oder ankoppelbar ist.

Durch die zweite Abgasturbine 66 lässt sich die Abgasenergie des Verbrennungsmotors 28 in zwei Stufen ausnutzen. In der ersten Abgasturbine 58, T wird die Abgasenergie durch den Kompressor 56, C zur Aufladung des Verbrennungsmotors 28 genutzt. In der zweiten Abgasturbine 66, T wird die verbleibende Abgasenergie zum weiteren Antreiben genutzt.

Hierdurch lässt sich gegenüber der ersten Ausführungsform die Abgastemperatur senken, wodurch die thermische Signatur des unbemannten Luftfahrzeuges 10 verringert werden kann.

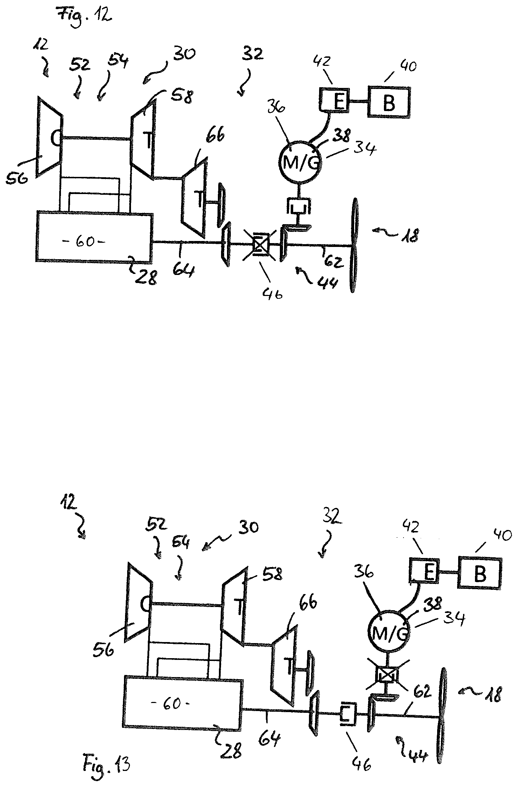

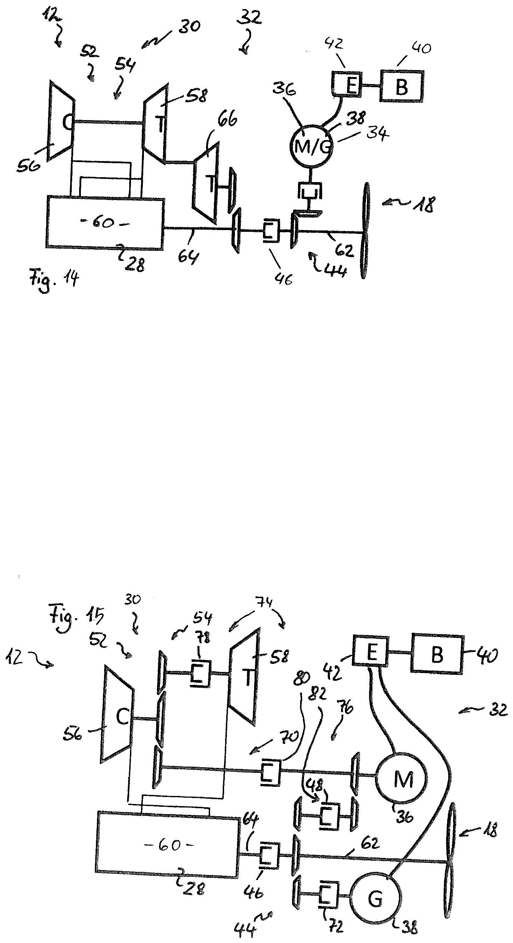

Ansonsten entspricht die Funktionalität der in den Fig. 11 bis 14 dargestellten zweiten Ausführungsform des Hybridantriebes 32 derjenigen der ersten Ausführungsform des Hybridantriebes 32, wie sie in den Fig. 7 bis 10 dargestellt ist. Demgemäß zeigt auch Fig. 12 den ersten Betriebsmodus für den reinen Elektrobetrieb, Fig. 13 zeigt den zweiten Betriebsmodus für den konventionellen Betrieb, und Fig. 14 zeigt den dritten Betriebsmodus, in dem entweder der elektrische Boost durchgeführt werden kann oder der Ladebetrieb durchgeführt werden kann. Für die weiteren Einzelheiten dieser drei Betriebsmodi wird auf die obigen Ausführungen bezüglich der ersten Ausführungsform verwiesen.

In den Fig. 15 bis 20 ist eine dritte Ausführungsform des Hybridantriebes 32 als Beispiel für den Antrieb 12 für das unbemannte Luftfahrzeug 10 dargestellt, wobei gleiche oder entsprechende Elemente wie bei den ersten beiden Ausführungsformen die gleichen Bezugszeichen tragen und für nähere Einzelheiten auf die obigen Darlegungen verwiesen werden kann.

Die Ladereinrichtung 30 ist bei dieser dritten Ausführungsform für eine schaltbare mehrstufige Aufladung ausgebildet und weist den ersten Lader 52 und einen zweiten Lader 70 zum Schaffen der mehrstufigen Aufladung auf, wobei die unterschiedlichen Lader 52, 70 über die Steuerung 50 gesteuert zuschaltbar oder abschaltbar sind, um die unterschiedlichen Stufen der Aufladung zuzuschalten oder abzuschalten.

Bei der dritten Ausführungsform des Hybridantriebes 32 ist hier anstelle der elektrischen Maschine 34, die sowohl im Elektromotorbetrieb als auch im Generatorbetrieb betrieben werden kann, wenigstens ein Elektromotor 36, M und ein Generator 38, G dargestellt. Die Kupplungseinrichtung 44 weist die erste Kupplung 46 zum Koppeln der Motorabtriebswelle 64 an die Abtriebswelle 62, die zweite Kupplung 48 zum Kuppeln des Elektromotors 36, M an die Abtriebswelle 62 und eine dritte Kupplung 72 zum Ankuppeln des Generators 72 an die Motorabtriebswelle 64 auf.

Weiter ist eine Lader-Kupplungseinrichtung 74 vorgesehen, um die Ladereinrichtung 30 zu schalten; insbesondere den ersten Lader 52 und/oder den zweiten Lader 70 anzukuppeln oder abzukuppeln.

Zum Bilden des ersten Laders 52 ist der Kompressor 56 mit der ersten Abgasturbine 58 vorgesehen.

Weiter ist als zweiter Lader 70 ein mechanischer Lader 76 vorgesehen. Der mechanische Lader 76 kann z.B. den Kompressor 56 und eine mechanische Antriebsquelle nutzen. In einer ersten Ausgestaltung oder einem ersten Aufladungsmodus wird hierzu ein elektrischer Antrieb, wie insbesondere der Elektromotor 36, M, ausgenutzt. In einer zweiten Ausführung oder einem zweiten Aufladungsmodus wird hierzu die Bewegung der Motorabtriebswelle 64 ausgenutzt.

In dem in Fig. 15 dargestellten Ausführungsbeispiel ist schematisch der Kompressor 56, C als Druckerzeuger dargestellt, der durch eine erste Laderkupplung 78 der Laderkupplungseinrichtung 74 an die erste Abgasturbine 58, T ankoppelbar ist, um so den Abgasturbolader 54 als ersten Lader 52 zu bilden, und durch eine zweite Laderkupplung 80 der Laderkupplungseinrichtung 74 an den Elektromotor 36, M ankuppelbar ist, um so den elektrisch betriebenen mechanischen Lader 76 zu bilden und gegebenenfalls durch eine dritte Laderkupplung 82 der Laderkupplungseinrichtung 74 an die Motorabtriebswelle 64 ankuppelbar ist, um so den durch die Abtriebswellenbewegung antreibbaren mechanischen Lader 76 zu bilden.

In der dargestellten Ausführung ist als dritte Laderkupplung 82 einfach die zweite Kupplung 48 der schaltbaren Kupplungseinrichtung 44 angedeutet.

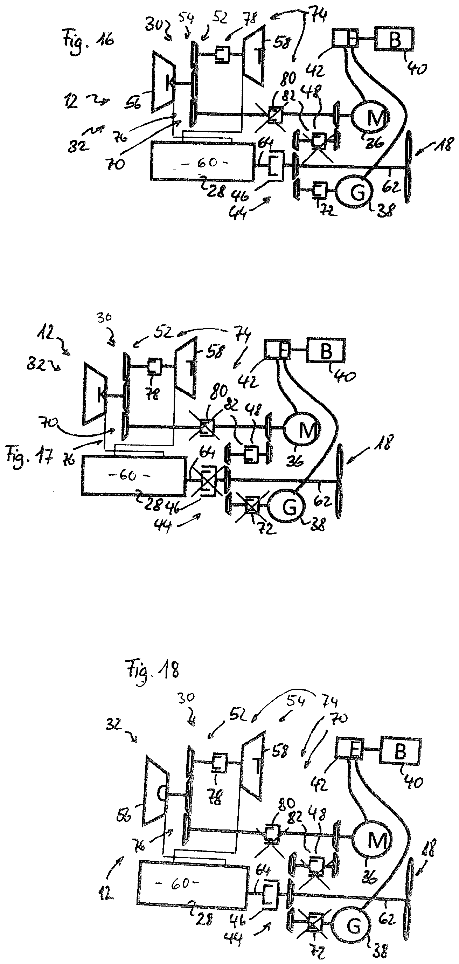

In den Fig. 16 bis 20 sind fünf unterschiedliche Betriebsmodi für diese dritte Ausführungsform des Hybridantriebes 32 dargestellt. In dem Betriebsmodus der Fig. 16 ist die erste Laderkupplung 78 eingerückt, so dass die erste Aufladungsstufe wirkt. Der mit der ersten Stufe aufgeladene Verbrennungsmotor 28 ist durch die eingerückte erste Kupplung 46 mit dem Schuberzeuger 18 verbunden. Der Generator 38, G ist durch die eingerückte dritte Kupplung 72 ebenfalls mit der Motorabtriebswelle 64 verbunden. Demnach entspricht der in Fig. 16 dargestellte erste Betriebsmodus einem Ladebetrieb, wo Schub über den auf einer ersten Stufe aufgeladenen Verbrennungsmotor 28 erzeugt wird und überschüssige Leistung zum Laden des elektrischen Energiespeichers 40 genutzt wird. Die zweite Kupplung 48 und die zweite Laderkupplung 80 sind ausgerückt, so dass der Elektromotor 36 weder mit der Ladereinrichtung 30 noch mit dem Schuberzeuger 18 verbunden ist.

Fig. 17 zeigt als zweiten Betriebsmodus den elektrischen Betrieb. Hierzu ist die zweite Laderkupplung 80 ausgerückt und der Elektromotor durch Einrücken der zweiten Kupplung 48 mit der Abtriebswelle 62 und damit dem Schuberzeuger 18 verbunden. Die erste Kupplung 46 und die dritte Kupplung 72 sind ausgerückt, so dass weder der Verbrennungsmotor 28 noch der Generator mit der Abtriebswelle 62 verbunden sind. Der Verbrennungsmotor 28 kann hier abgeschaltet sein.

Der in Fig. 18 dargestellte dritte Betriebsmodus entspricht dem konventionellen Betrieb bei einstufiger Aufladung rein mit dem Abgasturbolader 54. Hierzu sind lediglich die erste Kupplung 56 und die erste Laderkupplung 78 eingerückt, alle übrigen Kupplungen sind ausgerückt.

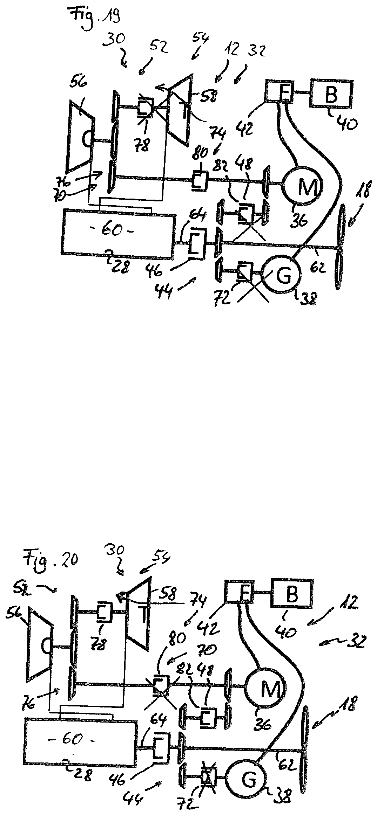

Fig. 19 zeigt einen vierten Betriebsmodus in Form eines Betriebs rein mit Verbrennungsmotor 28, wobei dieser aber durch den zweiten Lader 70 - elektrische Aufladung - geladen wird. Hierzu sind die erste Kupplung 46 und die zweite Laderkupplung 80 eingerückt, alle anderen Kupplungen sind ausgerückt.

Fig. 20 zeigt einen fünften Betriebsmodus, in dem als weitere Funktionalität der elektrische Boost dargestellt ist. Hierzu ist der einstufig aufgeladene Verbrennungsmotor 28 - Abgasturbolader 54 aktiv - mit dem Schuberzeuger 18 verbunden und zusätzlich ist noch der Elektromotor 36 mit dem Schuberzeuger 18 verbunden. Die erste Kupplung 46 und die zweite Kupplung 48 sowie die erste Laderkupplung 78 sind eingerückt, alle anderen Kupplungen sind ausgerückt.

Selbstverständlich sind weitere Betriebsmodi durch unterschiedliche Schaltungen der unterschiedlichen Kupplungen 46, 48, 72, 78, 80, 82 möglich.

Bei der in den Fig. 15 bis 20 dargestellten dritten Ausführungsform des Hybridantriebes 32 weist der Antrieb 12 einen Verbrennungsmotor - Dieselmotor/Wankelmotor- mit Aufladesystem - Ladereinrichtung 30 - umfassend den Kompressor 56 und die Abgasturbine 58 auf. Der Kompressor 56 der Ladereinrichtung 30 kann hierbei über ein Kupplungssystem - Laderkupplungseinrichtung 74 - entweder von der Abgasturbine 58 oder einem Elektromotor - z.B. dem Elektromotor M des Hybridsystems - angetrieben werden. Die Motorabtriebswelle 64 des Verbrennungsmotors 28 ist direkt mit dem Schuberzeuger 18 (z.B. Propeller 20 oder Rotor 25, 27) verbindbar. Zusätzlich ist der elektrische Generator 38, G über eine separate Kupplung - dritte Kupplung 72 - mit der Motorabtriebswelle 64 und/oder der Abtriebswelle 62 zu verbinden. Der Generator 38, G und der Elektromotor 36, M sind über eine elektronische Regeleinheit - Leistungselektronik 42, E - mit einer Pufferbatterie - Beispiel für den elektrischen Energiespeicher 40, B - verbunden, welche abwechselnd vom Generator 38, G geladen wird oder zur Versorgung des Elektromotors 36, M zu verwenden ist.

Durch den in den Fig. 15 bis 20 dargestellten Aufbau sind insbesondere die folgenden vier Betriebszustände möglich:
a) "Konventioneller Betrieb": Der Kompressor 56 des Abgasturboladers 54 wird von der Abgasturbine 58 der Ladereinrichtung 30 angetrieben, der Elektromotor 36, M und der Generator 38, G sind dabei abgekuppelt. Dies entspricht dem Betriebsmodus bisheriger konventioneller Antriebssysteme, allerdings mit dem Unterschied des Diesel- oder Kerosinbetriebs mit zusätzlicher Aufladung.
b) "Elektrischer Turbo": Der Kompressor 56 der Ladereinrichtung 70 wird in diesem Fall von dem Elektromotor 36, M angetrieben. Hierdurch kann eine größere Leistungssteigerung erzeugt werden, als dies bei einer Kopplung des Elektromotors 36, M an die Abtriebswelle 62 der Fall wäre.
c) "Elektrischer Boost": Hier wird zusätzlich zur Leistung der Verbrennungskraftmaschine die Leistung des Elektromotors 36, M auf die Abtriebswelle 62 übertragen.
d) "Lademodus": In Betriebsphasen, wo nicht die gesamte Motorleistung des Verbrennungsmotors 28 vom Schuberzeuger 18 benötigt wird, kann ein Teil der zur Verfügung stehenden Leistung an den Generator 38, G abgegeben werden, um die Batterie - elektrischer Energiespeicher 40, B - aufzuladen. Der Kompressor 56 der Ladereinrichtung 30 wird hierbei von der Abgasturbine 58 angetrieben, während der Elektromotor 36, M abgekoppelt ist.

### Dies bietet insbesondere folgende Vorteile.

Neben der Funktionalität eines Parallelhybrids - Betrieb mit Verbrennungskraftmaschine, rein elektrischer Betrieb oder Wiederaufladung der Batterie - kann der Elektromotor 36, M auf zwei Arten eingesetzt werden, um zusätzliche Leistung zur Verfügung zu stellen:
a) durch einen elektrischen Boost, in dem die Leistung direkt auf die Abtriebswelle 62 eingespeist wird oder
b) durch einen elektrisch angetriebenen mechanischen Lader 76, bei dem die benötigte Leistung für die Aufladung vom Elektromotor 36, M zur Verfügung gestellt wird und nicht in den Prozess des Verbrennungsmotors eingegriffen werden muss. Dies hat den Vorteil, dass im Gegensatz zum Antrieb mit einer Abgasturbine 58 kein Gegendruck beim Abgas aufgebaut wird, gegen welche der Verbrennungsmotor 28 sonst arbeiten muss. Im Gegensatz zur Verwendung eines mechanischen Antriebes für den mechanischen Lader 76 - insbesondere durch Ankupplung an die Motorabtriebswelle 64 - braucht keine mechanische Leistung der Abtriebswelle entzogen werden.

Voranstehend sind anhand der Figuren verschiedene Ausführungsformen für den Hybridantrieb 32 dargestellt. Selbstverständlich sind weitere Ausführungsformen möglich, die hier aber nicht näher dargestellt sind. Zum Beispiel kann die zweite Abgasturbine 66 auch bei der in den Fig. 15 bis 20 dargestellten Ausführungsform vorhanden sein, insbesondere schaltbar über eine gesonderte Schalteinrichtung, die diese zweite Abgasturbine 66 zuschalten oder abschalten kann.

Weiter ist zusätzlich oder alternativ zu dem Antrieb des mechanischen Laders 76 durch den Elektromotor 36 des Hybridantriebes auch ein gesonderter Elektromotor für den Antrieb des Kompressors möglich. Andererseits ist es auch möglich, den Kompressor 56 über die Motorabtriebswelle 64 anzutreiben. Weiter ist anstelle der Darstellung mit nur einem Kompressor 56 auch möglich, mehrere Kompressoren vorzusehen, die über die erste Abgasturbine 58, die zweite Abgasturbine 66, den Elektromotor 36 des Hybridantriebes 32 und/oder durch die Motorabtriebswelle 64 antreibbar sind.

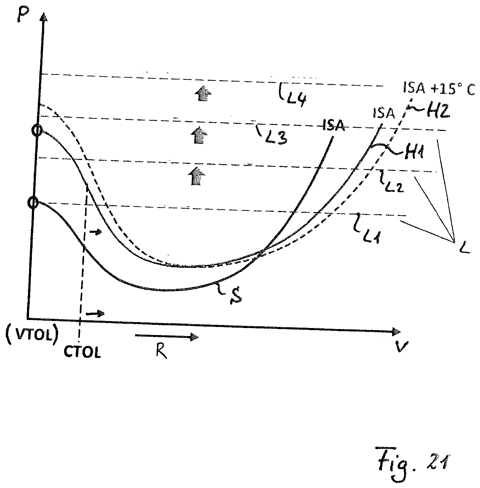

Im Folgenden wird noch anhand der Darstellung in Fig. 21 eine mögliche Steuerung des Hybridantriebes 32 für das unbemannte Luftfahrzeug 10 näher erläutert.

Wie die Fig. 1 bis 6 zeigen, ist das unbemannte Luftfahrzeug 10 ein UAV, das zu einem konventionellen Starten und Landen (CTOL) wie ein Flugzeug - Ausnutzung der Luftströmung bei Fahrt des Luftfahrzeugs 10 - fähig ist. Das Diagramm von Fig. 21 zeigt auf der linken Seite noch einen Leistungsbedarf, wie er bei zu vertikalen Starts und Landungen fähigen UAVs anderer Konfiguration als der hier interessierenden beim vertikalen Starten und Landen (VTOL) notwendig wäre. Aufgrund der vorteilhaften Ausbildung als Motorsegelflugzeug ist der Leistungsbedarf der erfindungsgemäßen Ausführungsformen zum konventionellen Starten und Landen (CTOL) um einiges geringer.

In dem Diagramm der Fig. 21 ist die benötigte Leistung P über die Fluggeschwindigkeit v dargestellt. Der Pfeil R zeigt den Bereich des Reiseflugs - Cruise-Bereich. "ISA" steht für die internationale Standard-Atmosphäre (Norm-Atmosphäre).

Die Kurve S zeigt die benötigte Leistung für die unterschiedlichen Flugbedingungen auf Seehöhe bei Standard-Atmosphären-Bedingungen; die Kurve H1 zeigt die benötigte Leistung bei großen Höhen und Standard-Atmosphären-Bedingungen und die Kurve H2 zeigt die benötigte Leistung bei großer Höhe und bei um ca. 15°C erhöhten Standard-Atmosphären-Bedingungen.

Durch die unterschiedlichen Betriebsmodi sind sämtliche bei diesen unterschiedlichen Betriebsbedingungen und Flugbedingungen benötigten Leistungsbereiche abgedeckt.

Die Steuerung schaltet die unterschiedlichen Betriebsmoden, wie insbesondere die Zu- oder Abschaltung der Ladereinrichtung oder die Zu- oder Abschaltung unterschiedlicher Lader oder unterschiedlicher Stufen der Aufladung, abhängig von Parametern, die diese Betriebsbedingungen anzeigen, wie IST-/SOLL-Geschwindigkeit, Höhe - insbesondere erfassbar über Drucksensoren - oder Temperatur.

Die in der Figur dargestellten, durch die Steuerung 50 zu- oder abschaltbaren Leistungsstufen L bezeichnen die maximal erreichbare Leistung für:
- L1: Verbrennungsmotorbetrieb ohne Aufladung;
- L2: Verbrennungsmotorbetrieb mit Aufladung in erster Stufe - insbesondere Betrieb des ersten Laders 52, d.h. des Abgasturboladers 54;
- L3: Verbrennungsmotorbetrieb mit Aufladung in der zweiten Stufe - z.B. Betrieb des zweiten Laders 70, wie insbesondere des elektrisch angetriebenen, mechanischen Laders 76;
- L4: Verbrennungsmotorbetrieb mit Aufladung in der zweiten Stufe und zusätzlich mit elektrischer Boost-Funktion.

### Bezugszeichenliste:

- 10: unbemanntes Luftfahrzeug
- 12: Antrieb
- 13: Rumpfstruktur
- 13a: erste Rumpfstruktur
- 13b: zweite Rumpfstruktur
- 14: Auftriebserzeugungsstruktur
- 14a: erste Auftriebserzeugungsstruktur
- 14b: zweite Auftriebserzeugungsstruktur
- 15: Tragflügelstruktur
- 15a: erste Tragflügelstruktur
- 15b: zweite Tragflügelstruktur
- 16: feststehende Tragfächen
- 17: Leitwerk
- 18: Schuberzeuger
- 20: Propeller
- 22: Seitenflosse
- 24: Auftriebserzeugungsstrukturbefestigungsschnittstelle
- 25: Rumpfstrukturbefestigungsschnittstelle
- 28: Verbrennungsmotor
- 28a: erstes Verbrennungsmotormodul
- 28b: zweites Verbrennungsmotormodul
- 28c: drittes Verbrennungsmotormodul
- 30: Ladereinrichtung
- 32: Hybridantrieb
- 34: elektrische Maschine
- 36, M: Elektromotor
- 38, G: Generator
- 40, B: elektrischer Energiespeicher
- 40a: erstes Batteriemodul
- 40b: zweites Batteriemodul
- 40c: drittes Battermodul
- 42, E: Leistungselektronik
- 44: schaltbare Kupplungseinrichtung
- 46: erste Kupplung
- 48: zweite Kupplung
- 50: Steuerung
- 52: erster Lader
- 54: Abgasturbolader
- 56: Kompressor
- 58: erste Abgasturbine
- 60: Kreiskolbenmotor
- 62: Abtriebswelle
- 64: Motorabtriebswelle
- 66: zweite Abgasturbine
- 70: zweiter Lader
- 72: dritte Kupplung
- 74: Laderkupplungseinrichtung
- 76: mechanischer Lader
- 78: erste Laderkupplung
- 80: zweite Laderkupplung
- 82: dritte Laderkupplung
- 100: erstes UAV (MALE oder HALE)
- 102: zweites UAV (MALE)
- 104: Bausatz
- S: Meereshöhe
- R: Cruise-Bereich
- v: Vorwärtsgeschwindigkeit
- P: Leistung
- H1: große Höhe, bei ISA
- H2: große Höhe, bei ISA+15°C
- ISA: Standardatmosphäre
- VTOL: Vertikalstart/-landung
- CTOL: konventionelle(r) Start/Landung
- L1: Verbrennungsmotorbetrieb ohne Aufladung
- L2: Verbrennungsmotorbetrieb mit Aufladung 1. Stufe
- L3: Verbrennungsmotorbetrieb mit Aufladung 2. Stufe
- L4: Verbrennungsmotorbetrieb mit Aufladung 2. Stufe + Elektrischer Boost

## Patentansprüche

1. Bausatz (104) zum Herstellen eines unbemannten Luftfahrzeugs (10) mit einem maximalen Startgewicht von wenigstens 250kg, wobei der Bausatz (104) eine Rumpfstruktur (13) mit einer Tragflügelstrukturbefestigungsschnittstelle (24) zur Befestigung einer Tragflügelstruktur (15) und weiter eine erste Tragflügelstrukur (15a) und eine unterschiedliche zweite Tragflügelstruktur (15b) aufweist, wobei die erste Tragflügelstruktur (15a) eine größere Spannweite als die zweite Tragflügelstruktur (15b) hat und zum Aufbau eines unbemannten Luftfahrzeugs (100) der HALE-Klassse ausgebildet ist und wobei die zweite Tragflügelstruktur (15b) zum Aufbau eines unbemannten Luftfahrzeugs (102) der MALE-Klasse ausgebildet ist, wobei die erste und die zweite Tragflügelstruktur (15a, 15b) jeweils eine gleich ausgebildete Rumpfstrukturbefestigungsschnittstelle (25) zur Befestigung an der Tragflügelstrukturbefestigungsschnittstelle (24) der Rumpfstruktur (13) aufweist.

2. Bausatz nach Anspruch 1,
**dadurch gekennzeichnet,**
**dass** der Bausatz (104) zur Herstellung eines unbemannten Motorsegelflugzeugs ausgebildet ist.

3. Bausatz nach einem der voranstehenden Ansprüche,
**dadurch gekennzeichnet,**
**dass** der Bausatz (104) einen modular aufgebauten Antrieb (12) umfasst.

4. Bausatz nach einem der voranstehenden Ansprüche,
**dadurch gekennzeichnet,**
**dass** der Bausatz (104) einen Antrieb (12) umfasst, wobei der Antrieb (12) einen als Diesel- und/oder Kerosinmotor ausgebildeten Verbrennungsmotor (28) mit Ladereinrichtung (30) zur Motoraufladung aufweist.

5. Bausatz nach einem der Ansprüche 3 oder 4,
**dadurch gekennzeichnet,**
**dass** der Antrieb (12) ein Hybridantrieb (32) ist, wobei der Bausatz (104) zusätzlich zu dem Verbrennungsmotor (28) einen Elektromotor (36, M) und eine Energiespeichereineinrichtung zum Speichern elektrischer Energie zum Antreiben des Elektromotors (36, M) umfasst.

6. Bausatz nach Anspruch 5,
**dadurch gekennzeichnet,**
**dass** der Hybridantrieb (32) eine schaltbare Kupplungseinrichtung (44) aufweist, mit der der Verbrennungsmotor (28) und/oder der Elektromotor (36, M) wahlweise mit einem Schuberzeuger (18) verbunden werden können.

7. Bausatz nach einem der Ansprüche 5 oder 6,
dass der Hybridantrieb (32) ein Parallel-Hybrid, bei dem wahlweise der Verbrennungsmotor (28) oder der Elektromotor (36, M) oder sowohl der Verbrennungsmotor (28) als auch der Elektromotor (36, M) mit einem Schuberzeuger (18) verbindbar sind, oder ein serieller Hybrid ist, bei dem der Verbrennungsmotor (28) als Range-Extender für den Elektromotorantrieb ausgebildet ist.

8. Bausatz nach einem der voranstehenden Ansprüche,
**dadurch gekennzeichnet,**
**dass** die Ladereinrichtung (30) modular ausgebildet ist, um wahlweise unterschiedliche Aufladungsstufen für den Verbrennungsmotor (28) vorzusehen.

9. Bausatz nach einem der voranstehenden Ansprüche,
**dadurch gekennzeichnet,**
**dass** der Verbrennungsmotor (28) modular aufgebaut ist, um wahlweise unterschiedliche Leistungsstufen des Verbrennungsmotors (28) vorzusehen.

10. Bausatz nach einem der voranstehenden Ansprüche,
**dadurch gekennzeichnet,**
**dass** der Verbrennungsmotor (28) ein Kreiskolbenmotor (60) ist.

11. Verfahren zum Herstellen eines unbemannten Luftfahrzeugs (10) unter Verwendung eines Bausatzes (104) nach einem der voranstehenden Ansprüche, mit: Auswählen der ersten Tragflügelstruktur (15a) oder der zweiten Tragfügelstruktur (15b) abhängig von der gewünschten maximalen Reiseflughöhe für das Luftfahrzeug (10) und Befestigen der ausgewählten Tragflügelstruktur (15) an der Rumpfstruktur (13),
wobei die erste Tragflügelstruktur (15a) ausgewählt wird, um ein unbemanntes Luftfahrzeug (102) der HALE-Klasse zu erhalten, und die zweite Tragflügelstruktur (15b) ausgewählt wird, um ein unbemanntes Luftfahrzeug (100) der MALE-Klasse zu erhalten.

12. Unbemanntes Luftfahrzeug (10) erhältlich durch Herstellung unter Verwendung eines Bausatzes (104) nach einem der Ansprüche 1 bis 10 und/oder durch ein Herstellverfahren nach Anspruch 11.

13. Verfahren zum Betrieb eines unbemannten Luftfahrzeugs nach Anspruch 12, **gekennzeichnet durch**:
Steuern einer Aufladung eines Verbrennungsmotors eines Antriebs des und/oder eines Zusammenwirkens von Verbrennungsmotor und Elektromotor eines Hybridantriebs abhängig von wenigstens einem der Parameter Höhe, Winkel eines Start- oder Landeflugs zur Vertikalen, gewünschte Geschwindigkeit, zulässige Wärmeabgabe, zulässiger Betriebsgeräuschpegel und/oder Temperatur.

14. Verfahren nach Anspruch 13,
**dadurch gekennzeichnet,**
**dass** bei Über- oder Unterschreiten vorbestimmter Grenzwerte für den wenigstens einen Parameter:
• eine erste Aufladungsstufe;
• eine zweite Aufladungsstufe,
• ein mechanischer Lader,
• ein elektrischer Lader,
• ein erster Abgaslader,
• ein zweiter Abgaslader oder
• ein Elektromotor zusätzlich zum laufenden Verbrennungsmotor und/oder
• der Verbrennungsmotor zusätzlich zum laufenden Elektromotor zugeschaltet oder abgeschaltet wird.

## Claims

1. Kit (104) for producing an unmanned aircraft (10) with a maximum take-off weight of at least 250 kg, the kit (104) having a fuselage structure (13) with a wing structure fastening interface (24) for fastening a wing structure (15) and having, furthermore, a first wing structure (15a) and a different second wing structure (15b), the first wing structure (15a) having a greater wingspan than the second wing structure (15b) and being configured for constructing an unmanned aircraft (100) of the HALE class, and the second wing structure (15b) being configured for constructing an unmanned aircraft (102) of the MALE class, the first and the second wing structure (15a, 15b) in each case having a fuselage structure fastening interface (25) of identical configuration for fastening to the wing structure fastening interface (24) of the fuselage structure (13).

2. Kit according to Claim 1, **characterized in that** the kit (104) is configured for producing an unmanned motorized glider.

3. Kit according to either of the preceding claims, **characterized in that** the kit (104) comprises a drive (12) of modular construction.

4. Kit according to one of the preceding claims, **characterized in that** the kit (104) comprises a drive (12), the drive (12) having an internal combustion engine (28) which is configured as a diesel and/or kerosene engine with a supercharger device (30) for engine supercharging.

5. Kit according to either of Claims 3 and 4, **characterized in that** the drive (12) is a hybrid drive (32), the kit (104) comprising, in addition to the internal combustion engine (28), an electric motor (36, M) and an energy store device for storing electric energy for driving the electric motor (36, M).

6. Kit according to Claim 5, **characterized in that** the hybrid drive (32) has a switchable clutch device (44), by way of which the internal combustion engine (28) and/or the electric motor (36, M) can be connected selectively to a thrust generator (18).

7. Kit according to either of Claims 5 and 6, in that the hybrid drive (32) is a parallel hybrid, in the case of which selectively the internal combustion engine (28) or the electric motor (36, M) or both the internal combustion engine (28) and the electric motor (36, M) can be connected to a thrust generator (18), or a serial hybrid, in the case of which the internal combustion engine (28) is configured as a range extender for the electric motor drive.

8. Kit according to one of the preceding claims, **characterized in that** the supercharger device (30) is of modular configuration, in order selectively to provide different supercharging stages for the internal combustion engine (28).

9. Kit according to one of the preceding claims, **characterized in that** the internal combustion engine (28) is of modular construction, in order selectively to provide different power stages of the internal combustion engine (28).

10. Kit according to one of the preceding claims, **characterized in that** the internal combustion engine (28) is a rotary piston engine (60).

11. Method for producing an unmanned aircraft (10) with the use of a kit (104) according to one of the preceding claims, comprising:
selecting of the first wing structure (15a) or the second wing structure (15b) in a manner which is dependent on the desired maximum cruising altitude for the aircraft (10), and fastening of the selected wing structure (15) to the fuselage structure (13),
the first wing structure (15a) being selected to obtain an unmanned aircraft (102) of the HALE class, and the second wing structure (15b) being selected to obtain an unmanned aircraft (100) of the MALE class.

12. Unmanned aircraft (10) obtainable by way of production with the use of a kit (104) according to one of Claims 1 to 10 and/or by way of a production method according to Claim 11.

13. Method for operating an unmanned aircraft according to Claim 12, **characterized by**:
controlling of supercharging of an internal combustion engine of a drive of the and/or an interaction of the internal combustion engine and the electric motor of a hybrid drive in a manner which is dependent on at least one of the parameters of altitude, angle of a take-off or landing with respect to the vertical, desired speed, permissible heat emission, permissible operating noise level and/or temperature.

14. Method according to Claim 13, **characterized in that**, if predetermined limit values for the at least one parameter are exceeded or undershot:
• a first supercharging stage;
• a second supercharging stage,
• a mechanical supercharger,
• an electric supercharger,
• a first exhaust gas turbocharger,
• a second exhaust gas turbocharger, or
• an electric motor in addition to the running internal combustion engine, and/or
• the internal combustion engine in addition to the running electric motor
are/is switched on or switched off.

## Revendications

1. Kit de construction (104) destiné à fabriquer un aéronef sans pilote (10) ayant une masse maximale au décollage d'au moins 250 kg, le kit de construction (104) comportant une structure de fuselage (13), pourvue d'une interface de fixation de structure d'aile portante (24) destinée à la fixation d'une structure d'aile portante (15), et en outre d'une première structure d'aile portante (15a) et une deuxième structure d'aile portante différente (15b), la première structure d'aile portante (15a) ayant une envergure supérieure à celle de la deuxième structure d'aile portante (15b) et étant conçue pour construire un aéronef sans pilote de classe HALE (100) et la deuxième structure d'aile portante (15b) étant conçue pour construire un aéronef sans pilote (102) de la classe MALE, les première et deuxième structures d'aile portante (15a, 15b) ayant chacune une interface de fixation de structure de fuselage (25) de même forme destinée à être fixée à l'interface de fixation d'aile portante (24) de la structure de fuselage (13).

2. Kit de construction selon la revendication 1, **caractérisé en ce que** le kit de construction (104) est conçu pour la fabrication d'un planeur motorisé sans pilote.

3. Kit de construction selon l'une des revendications précédentes, **caractérisé en ce que** le kit de construction (104) comprend un entraînement modulaire (12) .

4. Kit de construction selon l'une des revendications précédentes, **caractérisé en ce que** le kit de construction (104) comprend un entraînement (12), l'entraînement (12) étant conçu comme un moteur à combustion interne (28) conçu comme un moteur diesel et/ou à kérosène et comportant des moyens formant turbocompresseur (30) destinés à la suralimentation du moteur.

5. Kit de construction selon l'une des revendications 3 et 4, **caractérisé en ce que** l'entraînement (12) est un entraînement hybride (32), le kit de construction (104) comprenant, en plus du moteur à combustion interne (28), un moteur électrique (36, M) et un moyen accumulateur d'énergie destiné à stocker de l'énergie électrique pour entraîner le moteur électrique (36, M).

6. Kit de construction selon la revendication 5, **caractérisé en ce que** l'entraînement hybride (32) comporte un moyen d'accouplement commutable (44) avec lequel le moteur à combustion interne (28) et/ou le moteur électrique (36, M) peuvent éventuellement être raccordés à un propulseur (18).

7. Kit de construction selon l'une des revendications 5 et 6, en ce que l'entraînement hybride (32) est un hybride parallèle, dans lequel le moteur à combustion interne (28) ou le moteur électrique (36, M) ou à la fois le moteur à combustion interne (28) et le moteur électrique (36, M) peuvent être raccordés à un propulseur (18), ou est un hybride série dans lequel le moteur à combustion interne (28) est conçu comme un prolongateur d'autonomie pour l'entraînement par moteur électrique.

8. Kit de construction selon l'une des revendications précédentes, **caractérisé en ce que** le moyen formant turbocompresseur (30) a une conception modulaire afin de prévoir sélectivement différents niveaux de suralimentation du moteur à combustion interne (28).

9. Kit de construction selon l'une des revendications précédentes, **caractérisé en ce que** le moteur à combustion interne (28) a une conception modulaire afin de prévoir sélectivement différents niveaux de puissance du moteur à combustion interne (28).

10. Kit de construction selon l'une des revendications précédentes, **caractérisé en ce que** le moteur à combustion interne (28) est un moteur à piston rotatif (60) .

11. Procédé de fabrication d'un aéronef sans pilote (10) à l'aide d'un kit de construction (104) selon l'une quelconque des revendications précédentes, le procédé comprenant : la sélection de la première structure d'aile portante (15a) ou de la deuxième structure d'aile portante (15b) en fonction de l'altitude de croisière maximale souhaitée pour l'aéronef (10) et la fixation de la structure d'aile portante sélectionnée (15) à la structure de fuselage (13),
la première structure d'aile portante (15a) étant sélectionnée pour obtenir un aéronef sans pilote de classe HALE (102), et la deuxième structure d'aile portante (15b) étant sélectionnée pour obtenir un aéronef sans pilote de classe MALE (100).

12. Aéronef sans pilote (10) pouvant être obtenu par fabrication à l'aide d'un kit de construction (104) selon l'une des revendications 1 à 10 et/ou par un procédé de fabrication selon la revendication 11.

13. Procédé d'utilisation d'un aéronef sans pilote selon la revendication 12, **caractérisé par** les étapes suivantes :
commander une suralimentation d'un moteur à combustion interne d'un entraînement du et/ou une action conjointe d'un moteur à combustion interne et d'un moteur électrique d'un entraînement hybride en fonction d'au moins un des paramètres : hauteur, angle de décollage ou d'atterrissage par rapport à la verticale, vitesse souhaitée, dissipation thermique admissible, niveau de bruit de fonctionnement admissible et/ou température.

14. Procédé selon la revendication 13, **caractérisé par**, en cas de franchissement vers le haut ou vers le bas de valeurs limites prédéterminées pour l'au moins un paramètre, l'activation ou la désactivation :
• d'un premier niveau de suralimentation ;
• d'un deuxième niveau de suralimentation,
• d'un turbocompresseur mécanique,
• d'un turbocompresseur électrique,
• d'un premier turbocompresseur à gaz d'échappement,
• d'un deuxième turbocompresseur à gaz d'échappement ou
• d'un moteur électrique en plus du moteur à combustion interne en marche et/ou
• du moteur à combustion interne en plus du moteur électrique en marche.
